# EUROPÄISCHE PATENTSCHRIFT

(11) **EP 0 648 816 B1**
(45) Veröffentlichungstag und Bekanntmachung des Hinweises auf die Patenterteilung: **26.01.2000**
(21) Anmeldenummer: 94810586.1
(22) Anmeldetag: 06.10.1994
(51) Int. Cl.: C09B 67/00, D06P 3/32

(54) **Färben von Leder mit Farbstoffmischungen**
Dyeing of leather with dyestuff mixtures
Teinture du cuir avec des mélanges de colorants

(30) Priorität: 15.10.1993 CH 311593
(43) Veröffentlichungstag der Anmeldung: 19.04.1995
(73) Patentinhaber: Ciba Specialty Chemicals Holding Inc., 4057 Basel (CH)
(72) Erfinder: Hess, Markus, D-79410 Schweighof (DE); Streicher, Günter, D-79576 Weil am Rhein (DE)

(56) Entgegenhaltungen:
- EP-A- 0 055 808
- EP-A- 0 061 670
- EP-A- 0 433 229
- EP-A- 0 548 014
- EP-A- 0 558 450

## Beschreibung

Die vorliegende Erfindung betrifft ein Verfahren zum Färben von Leder mit Farbstoffmischungen, in dem man das Leder mit mindestens zwei wasserlöslichen Farbstoffen und mit mindestens zwei in Wasser praktisch unlöslichen Pigmenten färbt. Eine bevorzugte Ausführungsform der vorliegenden Erfindung betrifft ein Verfahren zum Trichromiefärben von Leder.

Verfahren zum Färben von Leder mit Mischungen wasserlöslicher Farbstoffe, auch das Trichromiefärben von Leder, sind bereits bekannt und werden auch in der Praxis mit grossem Erfolg angewendet. Da das zu färbende Leder jedoch häufig von schlechter Qualität ist, da es Schäden infolge von Verletzungen (Hautrisse), Milbenbefall, Pilzinfektion oder Dungverätzungen etc. aufweist, ist vielfach eine deckende Zurichtung des Leders erforderlich. Es ist auch bereits bekannt, dass man die erwähnten Schäden zum Teil abdecken kann, wenn man das Leder unter Verwendung eines Farbstoffes und eines Pigmentes färbt. Mischungen mehrerer Farbstoffe und mehrerer Pigmente wurden bisher nicht eingesetzt, da es schwierig ist in diesen Fällen egale Färbungen zu erzielen.

Es wurde nun gefunden, dass es überraschenderweise möglich ist, Leder egal Ton in Ton zu färben und die oben erwähnten Schäden abzudecken, indem man mindestens zwei wasserlösliche Farbstoffe und mindestens zwei in Wasser praktisch unlösliche Pigmente verwendet, wobei die Mischung der Farbstoffe und die Mischung der Pigmente die gleiche Nuance auf dem Leder ergeben müssen. Durch den Einsatz von Mischungen mehrerer Farbstoffe und mehrerer Pigmente erhält man Lederfärbungen von hervorragender Lichtechtheit. Bei Auswahl von zum Trichromiefärben geeigneten Farbstoff- und Pigmentmischungen gelingt es zudem auch, Leder schlechter Qualität mit den oben erwähnten Schäden nach dem Trichromieverfahren zu färben.

Gegenstand der vorliegenden Erfindung ist somit ein Verfahren zum Färben von Leder mit Farbstoffmischungen, das dadurch gekennzeichnet ist, dass man das Leder mit mindestens zwei wasserlöslichen Farbstoffen und mit mindestens zwei in Wasser praktisch unlöslichen Pigmenten färbt, wobei man die Farbstoffe und Pigmente so auswählt, dass die Mischung der Farbstoffe und die Mischung der Pigmente die gleiche Nuance auf dem Leder ergeben.

Vorzugsweise verwendet man mindestens zwei wasserlösliche Farbstoffe, ausgewählt aus einer Gruppe von zum Trichromiefärben geigneten wasserlöslichen Farbstoffen und insbesondere verwendet man mindestens zwei metallfreie Farbstoffe mit jeweils zwei Sulfo- oder Carboxygruppen und einem Molekulargewicht zwischen 790 und 1100.

Eine bevorzugte Ausführungsform des erfindungsgemässen Verfahrens besteht darin, dass man mindestens zwei Farbstoffe verwendet, ausgewählt aus der Gruppe, bestehend aus
a) einem gelben Farbstoff der Formel 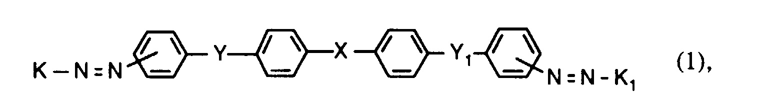 worin
   Y und Y₁ unabhängig voneinander je -SO₂O-, -COO-, -CONH- oder -SO₂NH-, X -C₁-C₄-Alkylen-, -CH=CH-, -O-, -S-, -SO₂-, -NH-, 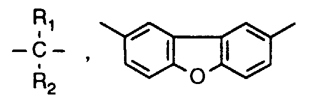 oder 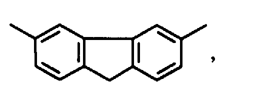 wobei R₁ und R₂ unabhängig voneinander je C₁-C₄-Alkyl bedeuten, und
   K und K₁ unabhängig voneinander je eine Kupplungskomponente der Formel 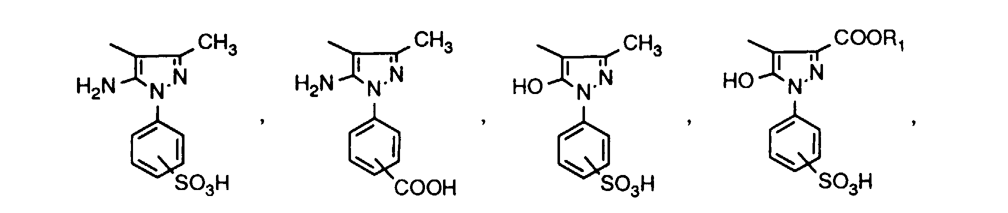 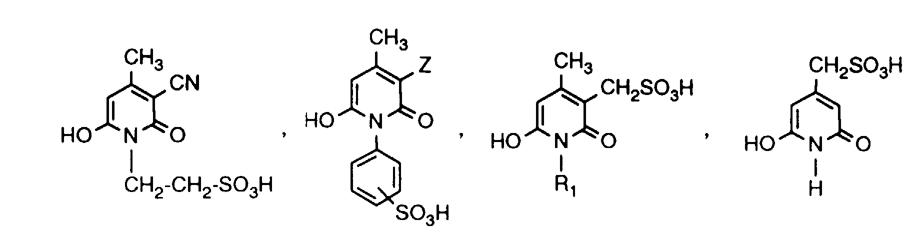 oder 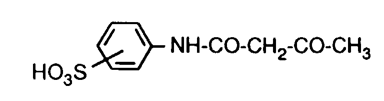 bedeuten, worin Z CN, COOH, COONH₂ oder COOR₁ bedeutet,
b) einem roten Farbstoff der Formel 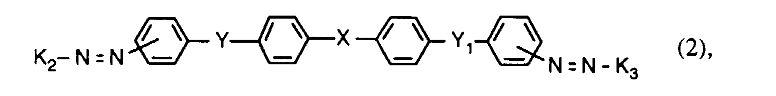
   worin K₂ und K₃ unabhängig voneinander je eine Kupplungskomponente der Formel 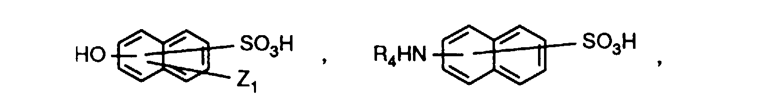 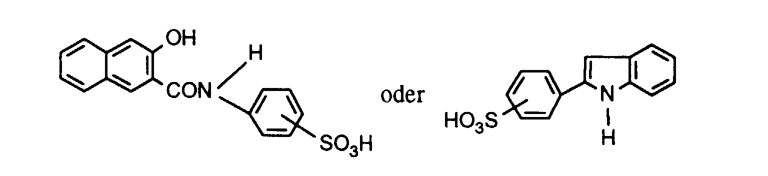 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann, und
   R₄ Wasserstoff oder Phenyl bedeutet,
      und
c) einem blauen Farbstoff der Formel 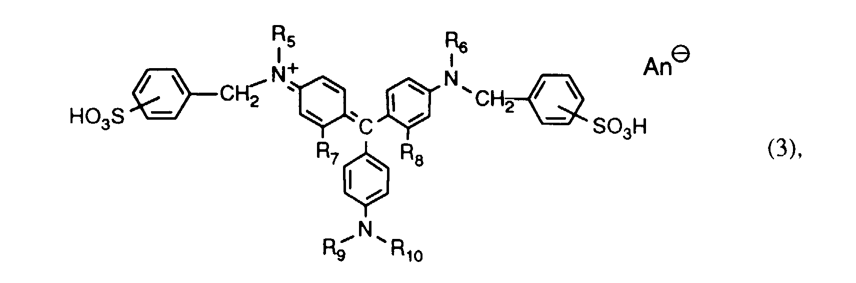 worin
   R₅, R₆, R₇, R₈ und R₉ unabhängig voneinander je Wasserstoff oder C₁-C₄-Alkyl sind, R₁₀ Wasserstoff, Phenyl oder durch C₁-C₄-Alkyl oder C₁-C₄-Alkoxy substituiertes Phenyl und
   An^{⊖} ein farbloses Anion bedeutet, oder der Formel 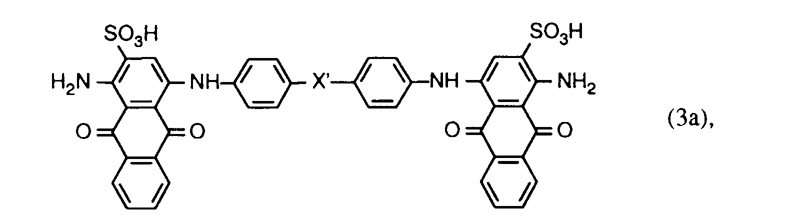 worin X' -C₁-C₄-Alkylen-, -CH=CH-, -O-, -S-, -SO₂-, -NH-, 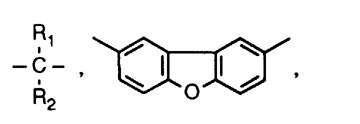 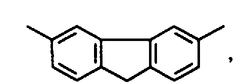 -NH-CO-, -NH-SO₂- oder -NH-CO-NH- ist, wobei R₁ und R₂ unabhängig voneinander je C₁-C₄-Alkyl bedeuten.

Die Alkyl- und Alkylengruppen können linear oder verzweigt sein. Als C₁-C₄-Alkyl kommen somit Methyl, Ethyl, n- oder iso-Propyl sowie n-, iso-, sec.- oder tert.-Butyl in Betracht. Bevorzugt unter diesen sind Methyl und Ethyl.

Die erfindungsgemäss verwendeten Farbstoffe mit kationischen Gruppen enthalten selbstverständlich äquivalente Mengen an Anionen.

Als Anion An^{⊖} kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Als Alkylengruppen kommen vorzugsweise unverzweigte Reste in Frage. Es handelt sich beispielsweise um Methylen, Ethylen, n-Propylen oder n-Butylen.

Geeignete Alkoxyreste sind z.B. Methoxy, Ethoxy, Propoxy, iso-Propoxy, n-Butoxy, iso-Butoxy oder tert.-Butoxy, vorzugsweise jedoch Methoxy oder Ethoxy.

Zum Trichromiefärben nach dem erfindungsgemässen Verfahren verwendet man vorzugsweise eine Farbstoffmischung, enthaltend einen gelben Farbstoff der Formel (1), einen roten Farbstoff der Formel (2) und einen blauen Farbstoff der Formel (3) oder (3a).

Bei den Farbstoffen der Formel (1) bedeutet Y vorzugsweise das gleiche wie Y₁, insbesondere bedeuten beide je -SO₂O-.

Ausserdem ist die Verwendung solcher Farbstoffe der Formel (1) bevorzugt, worin X 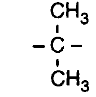 bedeutet.

Die Kupplungskomponenten K und K₁ sind bei den Farbstoffen der Formel (1) vorzugsweise gleich und vor allem bedeuten K und K₁ je eine Kupplungskomponente der Formel

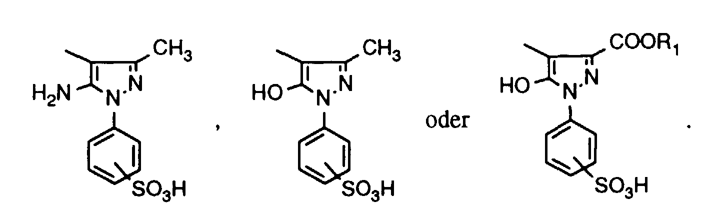

Besonders bevorzugt ist die Verwendung solcher Farbstoffe der Formel (1), worin K und K₁ je eine Kupplungskomponente der Formel 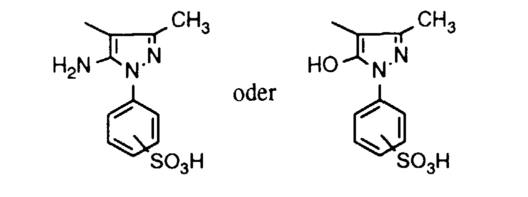 bedeutet.

Eine besonders bevorzugte Ausführungsform des erfindungsgemässen Verfahrens besteht darin, dass man den gelben Farbstoff der Formel 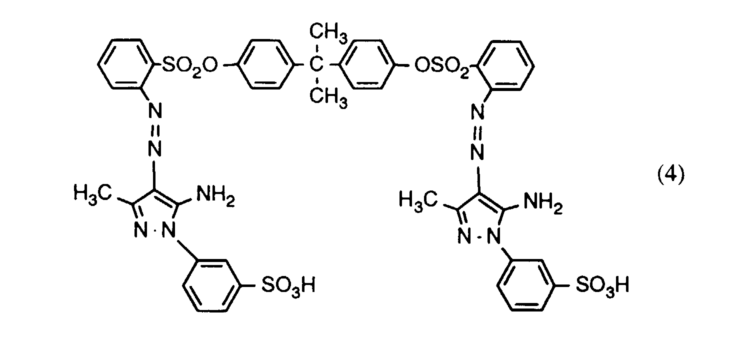 verwendet.

Eine weitere bevorzugte Ausführungsform des erfindungsgemässen Verfahrens ist dadurch gekennzeichnet, dass man einen roten Farbstoff der Formel (2) verwendet, worin Y das gleiche bedeutet wie Y₁, vorzugsweise beide -SO₂O-.

Ausserdem ist die Verwendung solcher Farbstoffe der Formel (2) bevorzugt, worin X 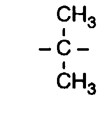 bedeutet.

Die Kupplungskomponenten K₂ und K₃ sind bei den Farbstoffen der Formel (2) vorzugsweise gleich und vor allem bedeuten K₂ und K₃ je eine Kupplungskomponente der Formel 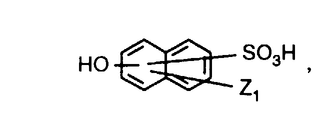 worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letztgenannten Resten durch C₁-C₄-Alkyl substituiert sein kann.

Weitere bevorzugte Ausführungsformen des erfindungsgemässen Verfahrens sind dadurch gekennzeichnet, dass man einen roten Farbstoff der Formel (2) verwendet, worin K₂ und K₃ je eine Kupplungskomponente der Formel 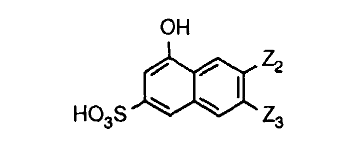 bedeuten, wobei von den Substituenten Z₂ und Z₃ der eine Wasserstoff und der andere NHR₃ bedeutet, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

Unter diesen sind solche Verfahren besonders bevorzugt, die dadurch gekennzeichnet sind, dass man einen roten Farbstoff der Formel (2) verwendet, worin K₂ und K₃ je eine Kupplungskomponente der Formel 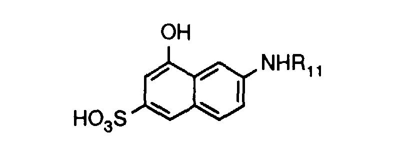 bedeuten, worin R₁₁ Wasserstoff, C₁-C₄-Alkyl, Cyan-C₂-C₄-Alkyl, C₁-C₄-Alkylcarbonyl, Phenylcarbonyl, Phenyl oder durch C₁-C₄-Alkyl substituiertes Phenyl bedeutet oder worin K₂ und K₃ je eine Kupplungskomponente der Formel 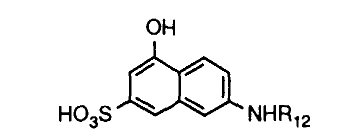 bedeuten, worin R₁₂ Wasserstoff, C₁-C₄-Alkyl, Aminocarbonyl, C₁-C₄-Alkylcarbonyl oder Phenylcarbonyl bedeutet.

Eine ganz besonders bevorzugte Ausführungsform des erfindungsgemässen Verfahrens besteht darin, dass man den roten Farbstoff der Formel 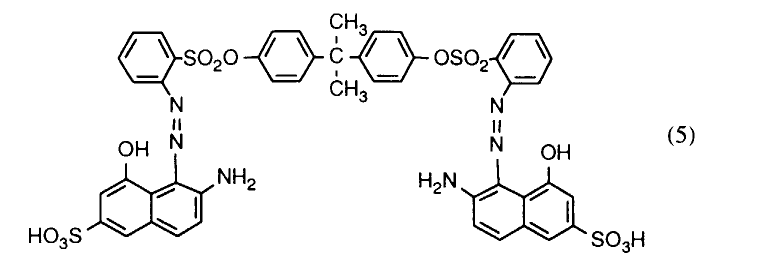 verwendet.

Eine weitere bevorzugte Ausführungsform des erfindungsgemässen Verfahrens ist dadurch gekennzeichnet, dass man einen blauen Farbstoff der Formel (3) verwendet, worin R₅, R₆, R₇, R₈ und R₉ unabhängig voneinander je Wasserstoff oder C₁-C₂-Alkyl und R₁₀ Wasserstoff, Phenyl oder durch C₁-C₂-Alkyl oder C₁-C₂-Alkoxy substituiertes Phenyl bedeutet, oder der Formel (3a), worin X' -C₁-C₄-Alkylen-, -CH=CH-, 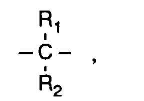 -NH-CO- oder -NH-CO-NH- ist, wobei R₁ und R₂ unabhängig voneinander je C₁-C₄-Alkyl bedeuten.

Ausserdem ist die Verwendung solcher Farbstoffe der Formel (3) bevorzugt, worin R₅ und R₆ unabhängig voneinander je C₁-C₂-Alkyl, R₇ und R₈ unabhängig voneinander je Wasserstoff oder C₁-C₂-Alkyl, R₉ Wasserstoff und R₁₀ Phenyl oder durch C₁-C₂-Alkyl oder C₁-C₂-Alkoxy substituiertes Phenyl bedeutet, oder solcher Farbstoffe der Formel (3a), worin X' -C₁-C₄-Alkylen- oder 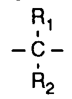 ist, wobei R₁ und R₂ unabhängig voneinander je C₁-C₄-Alkyl bedeuten.

Eine ganz besonders bevorzugte Ausführungsform des erfindungsgemässen Verfahrens besteht darin, dass man den blauen Farbstoff der Formel 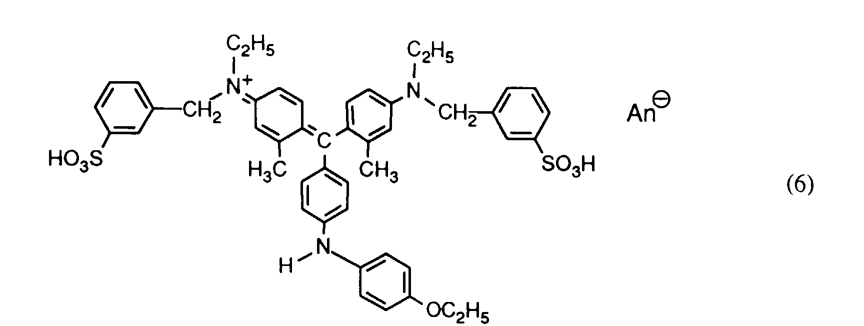 oder der Formel 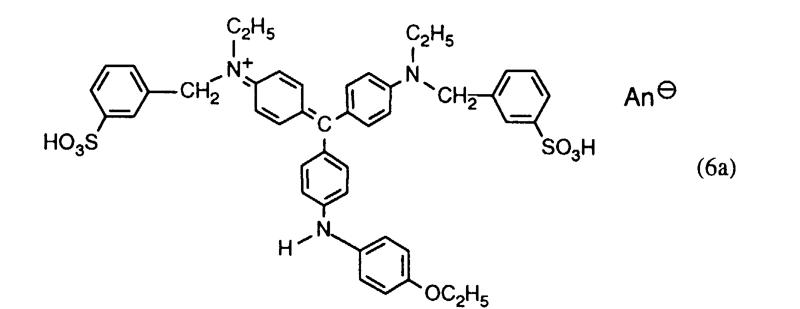 oder der Formel 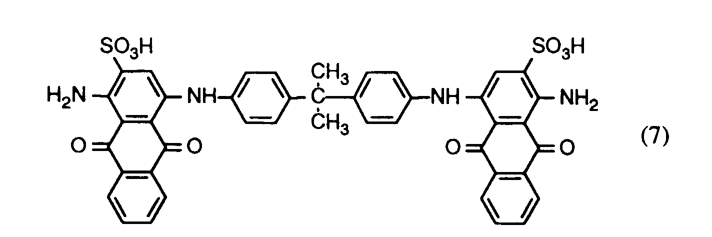 oder der Formel 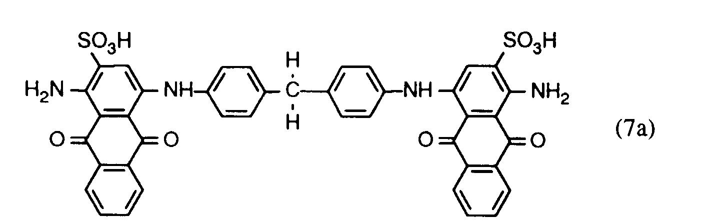 verwendet.

Eine ganz besonders wichtige Ausführungsform des erfindungsgemässen Verfahrens besteht darin, dass man zum Trichromiefärben eine Farbstoffmischung, enthaltend den gelben Farbstoff der Formel (4), den roten Farbstoff der Formel (5) und den blauen Farbstoff der Formel (6), (6a), (7) oder (7a), verwendet.

Eine weitere bevorzugte Ausführungsform des erfindungsgemässen Verfahrens ist dadurch gekennzeichnet, dass man als wasserlösliche Farbstoffe symmetrische 1:2-Komplexe der Formel 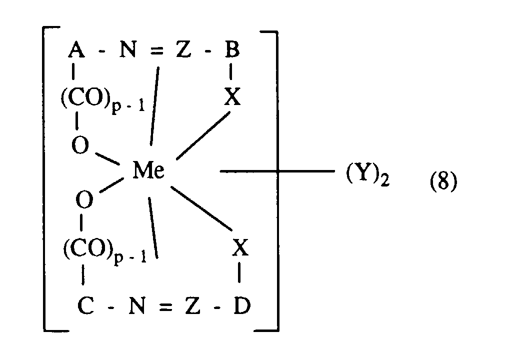 verwendet, worin
- Z: Stickstoff oder eine CH-Gruppe,
- A und C: identische Reste der Benzol- oder Naphthalinreihe, welche in o-Stellung zur Azo oder Azomethingruppe eine Hydroxy- oder Carboxygruppe enthalten,
- B und D: identische Reste einer Kupplungskomponente, wenn Z Stickstoff ist, wobei die Kupplungskomponente in o- oder α-Stellung zur Azogruppe die Gruppe X enthält, oder identische Reste eines o-Hydroxyaldehyds, wenn Z die CH-Gruppe darstellt,
- X: Sauerstoff oder eine Gruppe -NQ-, worin Q Wasserstoff oder C₁-C₄-Alkyl bedeutet,
- Me: Chrom oder Kobalt,
- Y: die SO₃H-Gruppe und
- p: 1 oder 2 bedeutet,
und worin die Farbstoffe
a) keine oder nur eine geringe Neigung zur Aggregation in elektrolythaltiger, wässriger Lösung zeigen und
b) auf Standard-Chromleder eine Eindringtiefe zwischen 20 und 200 µm aufweisen, wobei die Unterschiede in der Eindringtiefe der einzelnen Farbstoffe des Gemisches innerhalb von 50 µm liegen.

Die angegebenen Werte für die Eindringtiefe beziehen sich auf Standard-Chromkalbleder, hergestellt gemäss der Vorschrift VESLIC, C 1510. IUF 151 vom 11.12.1969 des Vereins schweiz. Lederindustriechemiker und gelten für eine Färbung in 1/1 Richttyptiefe, welche gemäss den Färbebedingungen des Beispiels 3 der EP-B-0 061 670 durchgeführt wurde, wobei die Eindringtiefe anhand eines Querschnittes durch das Leder unter dem Mikroskop gemessen wird.

Unter Farbstoffen, welche keine oder nur eine geringe Neigung zur Aggregation in elektrolythaltiger wässriger Lösung zeigen, werden solche verstanden, bei denen die Absorption des Lichtes einer wässrigen Lösung, welche 50 mg/l Farbstoff und 10 g/l NaCl enthält, um höchstens 5 %, vorzugsweise um höchstens 2 % niedriger ist, als die Absorption einer Lösung der gleichen Menge des Farbstoffes in destilliertem Wasser, wobei die Verminderung der Absorption im Absorptionsmaximum bestimmt wird.

Vorzugsweise verwendet man Farbstoffe, welche eine Eindringtiefe von 50 - 150 µm aufweisen und besonders gute Ergebnisse bezüglich Egalität der Färbungen werden erzielt, wenn man für das Farbstoffgemisch solche Farbstoffe verwendet, bei denen die Unterschiede in der Eindringtiefe der einzelnen Farbstoffe des Gemisches innerhalb eines Bereiches von 50 µm liegen.

Eine bevorzugte Ausführungsform des erfindungsgemässen Verfahrens besteht darin, dass man eine Mischung aus einem gelben, einem roten und einem blauen Farbstoff, d.h. eine Trichromie, verwendet.

Unter gelben Farbstoffen sind alle Farbstoffe mit gelber Nuance zu verstehen, z.B. gelbbraune oder auch rotstichig oder grünstichig gelbe Farbstoffe. Die orangefarbenen bis rotbraunen Farbstoffe werden insgesamt als rote Farbstoffe bezeichnet und die blauen, grauen oder violetten Farbstoffe als blaue Farbstoffe.

Von den Farbstoffen der Formel (8) werden vorzugsweise diejenigen verwendet, bei denen X Sauerstoff bedeutet, sowie solche, bei denen p gleich 1 ist.

Die Reste A und C können weitersubstituiert sein, insbesondere mit C₁-C₄-Alkyl oder -Alkoxy, Chlor, oder Nitro.

Geeignete Diazokomponenten A und C sind z.B.: 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor- und 4-Methyl-6-nitro-2-amino-1-hydroxybenzol, 1-hydroxybenzol, 6-Chlor-4-nitro-2-amino- 1-hydroxybenzol, 4-Cyan-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-hydroxybenzol, 4,6-Dinitro-2-amino-1-hydroxybenzol, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 1-Amino-2-hydroxy-naphthalin-4-sulfosäure, 1-Amino-2-hydroxy-6-nitronaphthalin-4-sulfosäure, oder 2-Amino-1-hydroxybenzol-4,6-disulfosäure, 1-Amino-2-hydroxybenzol-4-sulfonsäureamid oder 4-Methylsulfonyl-2-amino-1-hydroxybenzol.

Vorzugsweise stellen A und C unabhängig voneinander jeweils den Rest eines 1-Hydroxy-2-aminobenzols dar, welcher gegebenenfalls ein- oder mehrmals durch gleiche oder verschiedene Substituenten aus der Reihe Nitro, Sulfo, Chlor, Methyl oder Methoxy substituiert ist, und insbesondere den Rest eines 1-Hydroxy-2-aminobenzols, der in 4- oder 5-Stellung eine Nitrogruppe trägt oder den Rest eines 1-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt.

Die Reste B bzw. D leiten sich vorzugsweise von folgenden Gruppen von Kupplungskomponenten ab: gegebenenfalls durch C₁-C₄-Alkyl oder -Alkoxy, Amino oder Acylamino substituiertes Phenol, wobei Acylamino C₁-C₄-Alkanoylamino-, C₁-C₄-Aklylsulfonylamino-, C₁-C₄-Alkoxycarbonylamino-, Aroylamino- oder Arylsulfonylaminoreste bedeutet, Resorcin, m-Phenylendiamin, gegebenenfalls in 4-Stellung substituiert durch Sulfo, Chlor, Methyl oder Methoxy, Naphthole, die gegebenenfalls mit C₁-₄-Alkyl oder Alkoxy, Chlor, Amino, Acylamino oder Sulfo substituiert sind, wobei Acylamino dieselbe Bedeutung hat, die vorne angegeben ist, 5-Pyrazolone oder 5-Aminopyrazole, die in 1-Stellung einen gegebenenfalls mit Chlor, Nitro, C₁-C₄-Alkyl- oder Alkoxygruppen oder Sulfogruppen substituierten Phenyl- oder Naphthylrest besitzen und in 3-Stellung eine C₁-C₄-Alkylgruppe, insbesondere eine Methylgruppe aufweisen.

Acetessigsäureamide, Acetessigsäureanilide und Benzoylessigsäureanilide, die im Anilidkern gegebenenfalls mit Chlor, C₁-C₄-Aklyl- oder Alkoxy- oder Sulfogruppen substituiert sein können, oder 6-Hydroxy-3-cyano- oder 6-Hydroxy-3-carbonamido-4-alkyl-2-pyridone, die in 1-Stellung durch gegebenenfalls substituiertes C₁-C₄-Alkyl, z.B. Methyl, Isopropyl, β-Hydroxyethyl, β-Aminoethyl oder γ-Isopropoxypropyl oder durch Phenyl substituiert sind, und in 4-Stellung eine C₁-C₄-Alkylgruppe, insbesondere Methyl, tragen können.

Beispiele solcher Kupplungskomponenten sind: 2-Naphthol, 1,3- oder 1,5-Dihydroxynaphthalin, 1-Naphthol, 1-Acetylamino-7-naphthol, 1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 1-Naphthol-3,6-disulfosäure, 1-Naphthol-4,8-disulfosäure, 1-Naphthol-3,8-disulfosäure, 2-Naphthol-3,6-disulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6- oder -5-sulfosäure, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-(2',3'- oder 4'-Sulfophenyl)-3-methylpyrazol-5-on, 1-(2'-Chlor-5'-sufophenyl-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2'-,5'- oder 3',4'-Dichlorphenyl)-3-methylpyrazol-5-on, 1-(2',5'-Dichlor-4'-sulfophenyl)-3-methylpyrazol-5-on, 1-(2'-, 3'- oder 4'-Sulfophenyl)-3-methyl-5-aminopyrazol, 1-(2'-Chlor-5'-sulfophenyl)-3-methyl-5-aminopyrazol, Acetoacetanilid, Acetoacetanilid-2-,-3- oder -4-sulfosäure, Acetoacet-o-anisidid, Acetoacet-o-toluidid, Acetoacet -o-chloranilid, Acetoacet-m-xylidid, Tetralol, 4-Methylphenol, 3-Dialkylaminophenol, besonders 3-Dimethylamino- und 3-Diethylaminophenol, 4-Butylphenol, 4-Amylphenol, insbesondere 4-t-Amylphenol, 2-Isopropyl4-methylphenol, 2- oder 3-Acetylamino-4-methylphenol, 2-Methoxycarbonyl-amino-4-methylphenol, 2-Ethocycarbonylamino-4-methylphenol und 3,4-Dimethylphenol, Resorcin, I-Ethyl-3-cyano-4-methyl-6-hydroxypyridon, 1-Methyl-3-cyano-4-methyl-6-hydroxypyridon, 1-Phenyl-3-carbonamido-4-methyl-6-hydroxypyridon.

Vorzugsweise stellt B bzw. D ein 1- oder 2-Naphthol, gegebenenfalls substituiert mit einer Sulfogruppe, m-Phenylendiamin, Resorcin, p-Alkyl(C₁-C₄)-Phenol, 1-Phenyl-3-methyl-5-pyrazolon oder Acetessigsäureanilid dar, wobei die Phenylgruppe in den beiden letztgenannten Verbindungen durch C₁-C₄-Aklyl, C₁-C₄-Alkoxy, Chlor oder Sulfo substituiert sein kann.

Sofern Z die -CH-Gruppe ist, stellt B bzw. D den Rest eines o-Hydroxyaldehyds dar, vorzugsweise einen o-Hydroxybenzaldehyd oder o-Hydroxynaphthaldehyd. Geeignete Aldehyde sind beispielsweise:
2-Hydroxy-1-naphthaldehyd, 1-Hydroxy-2-naphthaldehyd, 2-Hydroxy-benzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2'-, 3'- oder 4'-Sulfophenylazo)-2-hydroxybenzaldehyd oder 5-(6'-Sulfonaphthyl- 1-azo)-2-hydroxybenzaldehyd.

Wegen ihrer guten Kombinierbarkeit sind für das erfindungsgemässe Verfahren insbesondere solche wasserlöslichen symmetrischen 1:2- Komplexe der Formel 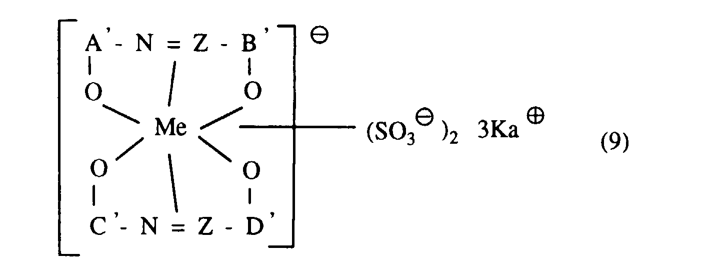 geeignet, worin
Z Stickstoff oder eine CH-Gruppe,
- A' und C': jeweils den Rest den Rest eines 1-Hydroxy-2-aminobenzols bedeuten, der in 4- oder 5- Stellung eine Nitrogruppe trägt, oder den Rest eines 1-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt,
- B' und D': jeweils den Rest einer der folgenden Kupplungskomponenten bedeuten, falls Z Stickstoff ist: p-C₁-C₄-Alkylphenol, Resorcin, m-Phenylendiamin, 1- oder 2-Naphthol, gegebenenfalls mit Sulfo substituiert, 1-Phenyl-3-methyl-5-pyrazolon oder Acetessigsäureanilid, wobei die Phenylgruppe in den beiden letztgenannten Verbindungen durch Chlor, C₁-C₄-Alkyl, C₁-C₄-Alkoxy oder Sulfo substituiert sein kann, oder, falls Z die CH-Gruppe bedeutet, den Rest eines o- Hydroxybenzaldehyds oder o-Hydroxynaphthaldehyds, die durch Phenylazo oder Sulfophenylazo substituiert sein können,
- Me: Kobalt oder Chrom und
- Ka^{⊕}: ein Kation bedeutet.

Vorzugsweise setzt man im erfindungsgemässen Verfahren mindestens drei wasserlösliche Farbstoffe der Formel (8) ein.

Eine besonders bevorzugte Ausführungsform besteht darin, dass man eine Mischung von wasserlöslichen Farbstoffen verwendet, enthaltend
a) einen Farbstoff der Formel 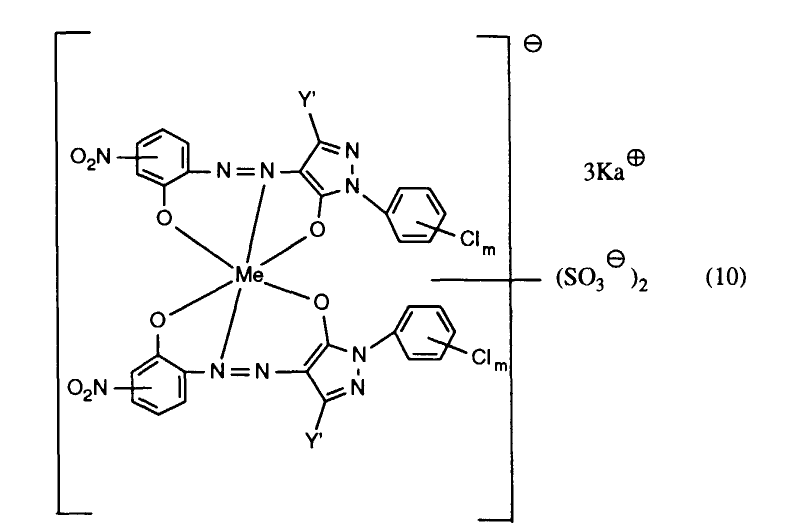 worin m eine ganze Zahl von 0 bis 2, Me Kobalt oder Chrom, Ka^{⊕} ein Kation und Y' Methyl, -CONH₂ oder -CONHR₁ bedeutet, wobei R₁ C₁-C₄-Alkyl bedeutet,
b) einen Farbstoff der Formel 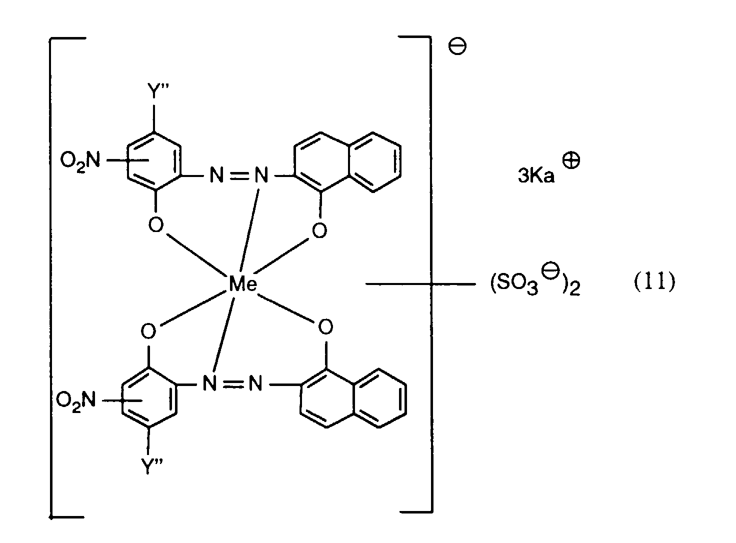 worin Y" Wasserstoff, Chlor, Methyl oder Methoxy, Me Kobalt oder Chrom und Ka^{⊕} ein Kation bedeutet, sowie
c) einen weiteren Farbstoff der oben angegebenen Formel (10) oder einen Farbstoff der Formel 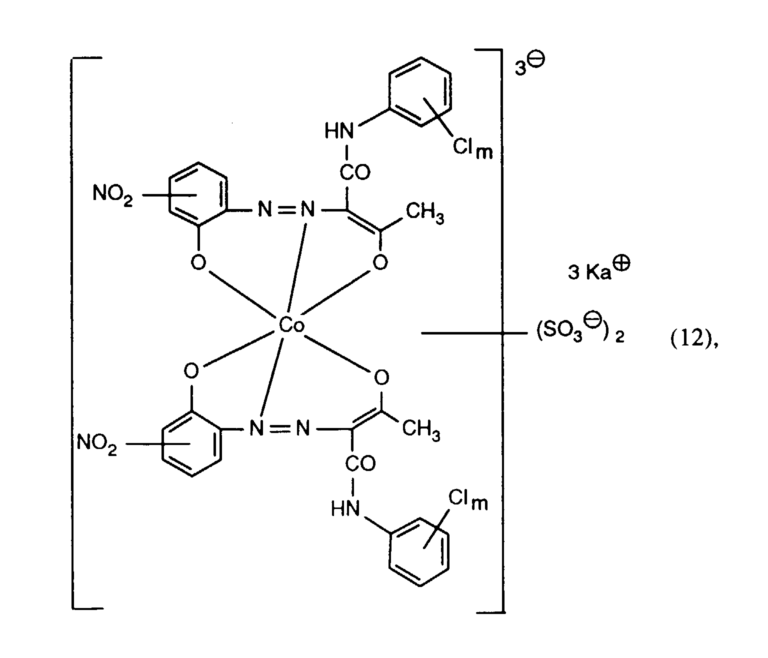 worin m eine ganze Zahl von 0 bis 2 und Ka^{⊕} ein Kation bedeutet.

Als Pigmente verwendet man vorzugsweise mindestens zwei Pigmente, ausgewählt aus einer Gruppe von zum Trichromiefärben geigneten Pigmenten, vor allem solche, ausgewählt aus der Gruppe, bestehend aus
a) gelben Pigmenten der Formel 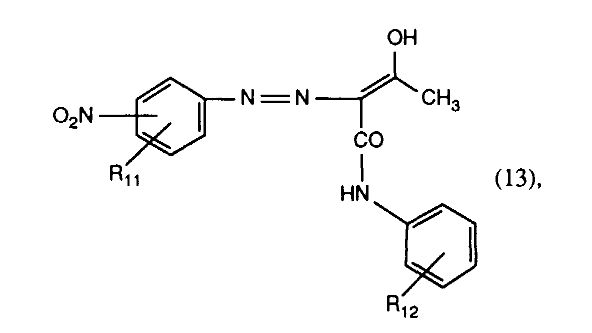 worin R₁₁ und R₁₂ unabhängig voneinander je Wasserstoff, C₁-C₄-Alkyl, C₁-C₄-Alkoxy oder Halogen bedeuten,
b) roten Pigmenten der Formel 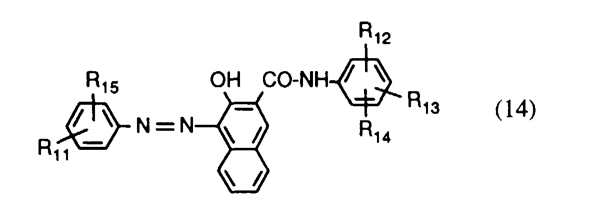 worin R₁₁, R₁₂, R₁₃ und R₁₄ unabhängig voneinander je Wasserstoff, C₁-C₄-Alkyl, C₁-C₄-Alkoxy oder Halogen und R₁₅ einen Rest der Formel -SO₂-N(R₁₆)₂ bedeuten, wobei R₁₆ gegebenenfalls substituiertes C₁-C₄-Alkyl ist, und
c) dem blauen Pigment der Formel

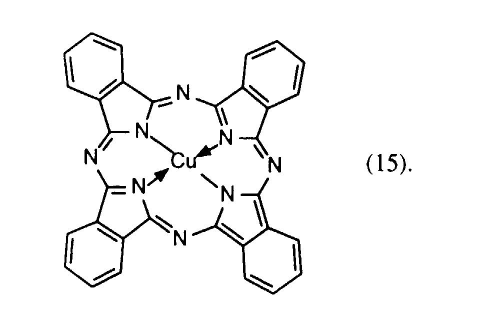

Ausserdem setzt man bevorzugt ein braunes Pigment der Formel 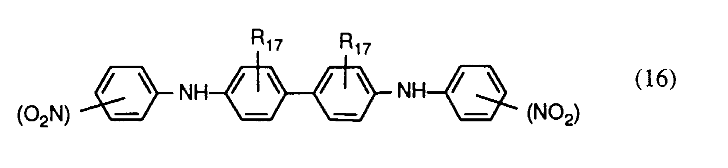 ein.

Ganz besonders bevorzugt verwendet man das gelbe Pigment der Formel 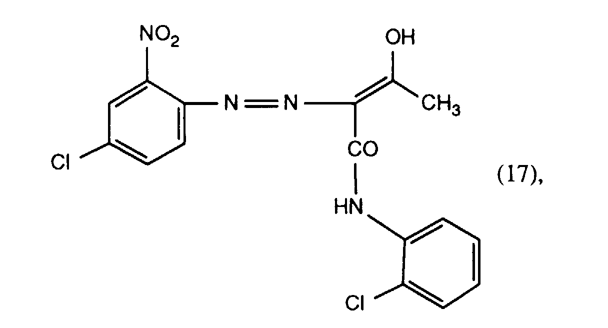 das rote Pigment der Formel 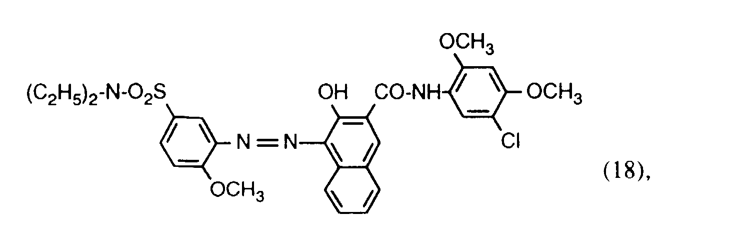 das blaue Pigment der Formel 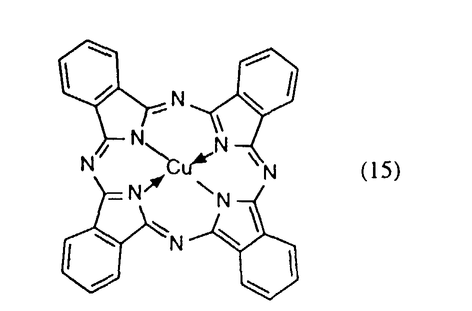 oder das braune Pigment der Formel

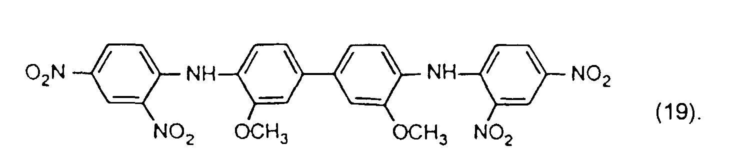

Die erfindungsgemäss verwendeten wasserlöslichen Farbstoffe sind anionischer Natur und werden vorteilhaft in Form ihrer Salze, insbesondere Alkalisalze oder Ammoniumsalze, eingesetzt. Als Alkalisalze kommen vor allem die Lithium-, Kalium- oder Natriumsalze in Betracht und unter Ammoniumsalzen sind auch Salze organischer Amine zu verstehen, z.B. solcher, die mit C₁-C₆-Alkyl- oder Hydroxy-C₁-C₆-alkylgruppen substituiert sind.

Die im erfindungsgemässen Verfahren verwendeten Farbstoffe sind bekannt oder können auf an sich bekannte Art und Weise hergestellt werden.

Die Mengen, in denen die erfindungsgemäss verwendeten Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel, Egalisiermittel, die Penetration beschleunigende Mittel und/oder Antischaummittel.

Die erfindungsgemäss verwendeten Pigmente werden als übliche Handelsformen, d.h. in feingemahlener Form zusammen mit Dispergiermitteln, eingesetzt. Vorzugsweise ist die Teilchengrösse kleiner als 0,5 µm, insbesondere kleiner als 0,1 µm. Als Dispergiermittel kommen vor allem anionische Verbindungen, wie z.B. Ligninsulfonate oder Kondensationsprodukte aromatischer Sulfonsäuren mit Formaldehyd in Betracht.

In einer bevorzugten Ausführungsform des erfindungsgemässen Verfahrens wird vor der Zugabe der Pigmente das Leder in wässriger Flotte mit einem kationischen Hilfsmittel behandelt, beispielsweise bei 20 bis 60°C und einem pH-Wert zwischen 2,5 und 4,5 während 10 bis 50 Minuten. Als geeignete kationische Hilfsmittel kommen z.B. kationische Lederfettungs- oder Gerbmittel in Frage. Geeignet sind z.B. polyquaternäre Amin-Ethylenoxid-Addukte, kationische Zubereitungen auf Basis chlorierter Kohlenwasserstoffe und n-Alkylderivaten, chromhaltige Phenolsulfosäure-Kondensate, kationische Zubereitungen aus ethoxylierten Fettaminen und Fettalkoholen sowie Amin-Dicyandiamid-Kondensatinsprodukte. Diese Hilfsmittel werden vorzugsweise in Mengen von 1 bis 6 Gew.%, vor allem 2 bis 4 Gew.%, bezogen auf das Gewicht des Leders, eingesetzt.

Bevorzugte kationische Hilfsmittel sind kationische chromhaltige Phenolsulfosäure-Kondensate

Das Färben mit den wasserlöslichen Farbstoffen und den Pigmenten erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100° C, vorzugsweise 30 bis 60° C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 30 und 180 Minuten.

Vorzugsweise färbt man zunächst mit den wasserlöslichen Farbstoffen unter den für solche Farbstoffe üblichen Färbebedingungen, z.B. bei einem pH-Wert von mehr als 7. Anschliessend lässt man die Färbeflotte ablaufen, gibt frisches Wasser, gegebenenfalls Mitel zur Einstellung des gewünschten pH-Wertes und ein kationisches Hilfsmittel sowie danach die Pigmente zu und färbt dann weiter nach dem Ausziehverfahren.

Vorzugsweise erfolgt das Färben im Fass.

Nach der Färbung wird das Leder auf übliche Weise fertiggestellt.

Man erhält nach dem erfindungsgemässen Verfahren Lederfärbungen in brillanten Farbtönen und mit guten Echtheiten, wie z.B. Licht- und Nassechtheiten.

Für den Einsatz zum Färben werden die einzelnen Farbstoffe miteinander vermischt. Die Farbstoffe können dabei einzeln als Stammlösungen für das Färbeverfahren vorbereitet oder zusammen in eine einzige Stammlösung formuliert werden.

Aus EP-A-0 558 450 und EP-A-0 061 670 ist bereits die Verwendung wasserlöslicher Farbstoffe zum Trichromiefärben von Leder bekannt, nicht jedoch deren Verwendung in Kombination mit Pigmenten.

In EP-A-0 055 808 ist die Verwendung einer Farbstoffmischung, enthaltend einen Farbstoff mit einer Sulfogruppe und einen Farbstoff mit einer Sulfamoylgruppe, beschrieben.

Die nachfolgenden Beispiele veranschaulichen die Erfindung, ohne sie darauf zu beschränken. Teile bedeuten Gewichtsteile und Prozente Gewichtsprozente. Die Farbstoffe werden in handelsüblicher Pulver- oder Flüssigform eingesetzt.

### Beispiel 1:

100 Teile Leder (Crust) (Trockengewicht) werden bei 50°C in einer Lösung von 600 Teilen Wasser, 1 Teil 24 %igem Ammoniak und 2 Teilen Fettsäureamidkondensationsprodukt während 40 Minuten broschiert.

Nach diesen vorbereitenden Operationen wird das Leder in einer Flotte aus 200 Teilen Wasser, 2 Teilen Natriumsalzen aromatischer Sulfon- und aliphatischer Dicarbonsäuren und 2 Teilen Natriumsalz der Dinaphthylmethandisulfosäure 20 Minuten bei 20°C behandelt Dann gibt man 3 Teilen Ammoniak 24%ig zu und setzt die Behandlung noch weitere 5 Minuten fort. Man fügt danach 1 Teil einer Zubereitung aus ethoxylierten Fettaminen und Fettalkoholen, 1 Teil des gelben Farbstoffes der Formel 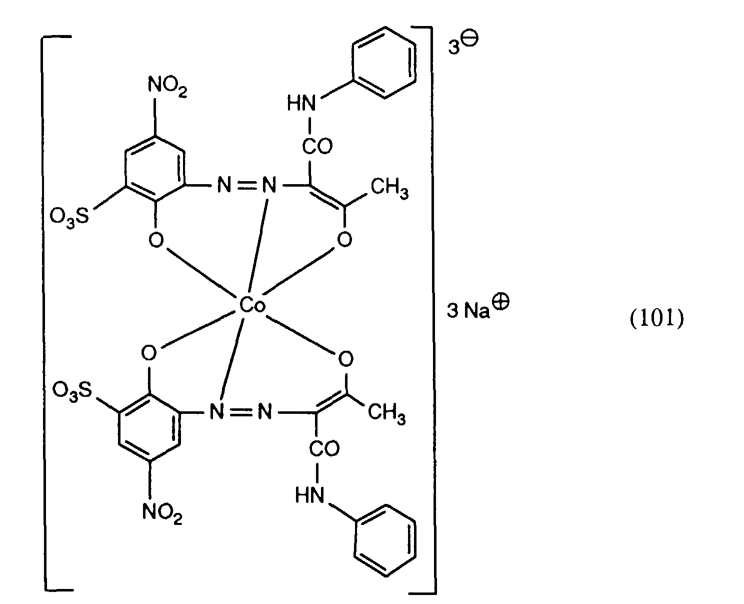 3,6 Teile des roten Farbstoffes der Formel 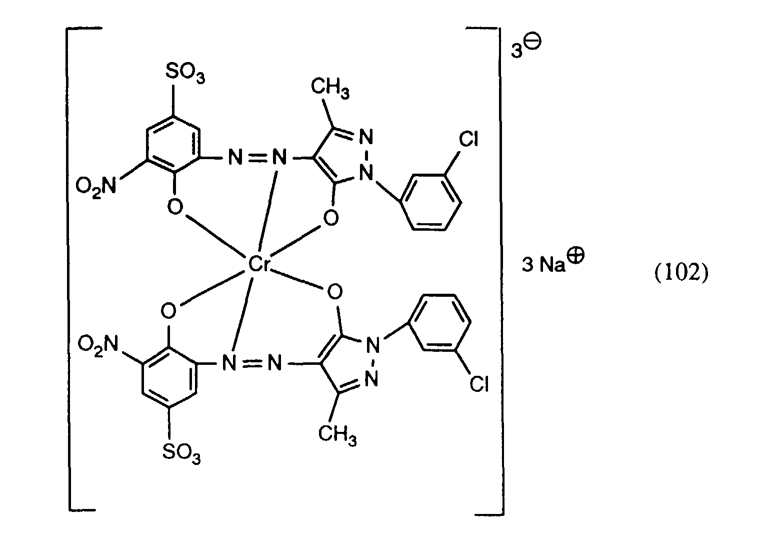 und 0,8 Teile des braunen Farbstoffes der Formel 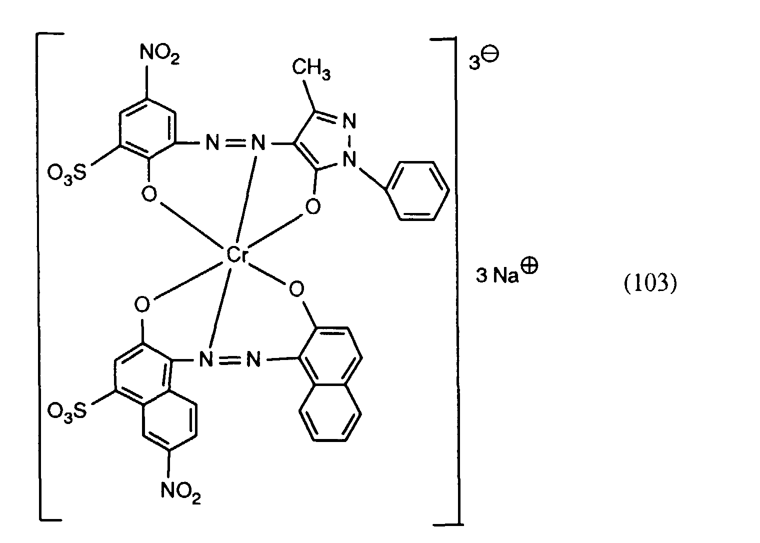 zu und färbt während 60 Minuten. Anschliessend setzt man 400 Teile Wasser von 60°C zu und färbt weitere 5 Minuten, dann fügt man 6 Teile eines Fettungsmittels und nach 20 Minuten 4 Teile eines natürlichen Gerbstoffes zu und nach einer Behandlungszeit von 35 Minuten 2 Teile 85 %ige Ameisensäure, nach weiteren 20 Minuten noch 3 Teile 85 %ige Ameisensäure und nach weiteren 20 Minuten noch 2 Teile 85 %ige Ameisensäure, so dass ein pH-Wert von ca. 3,7 erreicht ist. Man behandelt weitere 20 Minuten und lässt dann die Flotte ablaufen.

Dann gibt man zu dem Leder 600 Teile Wasser und 2 Teile eines chromsalzhaltigen Phenolsulfosäure-Kondensates und behandelt 20 Minuten bei 50°C. Danach setzt man 1,5 Teile des roten Pigmentes der Formel 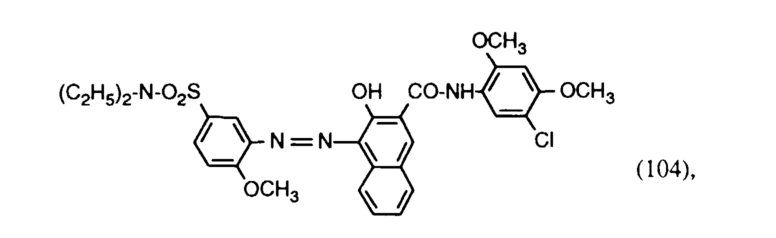 0,2 Teile des blauen Pigmentes der Formel 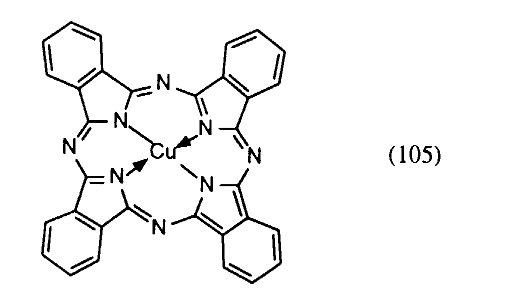 und 0,55 Teile des braunen Pigmentes der Formel 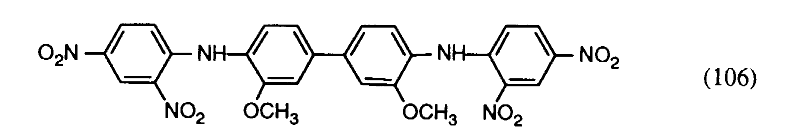 zu und färbt weitere 20 Minuten bei dieser Temperatur. Durch Zusatz von ca. 0,5 Teilen 85 %iger Ameisensäure zur Einstellung eines pH-Wertes von 3,5 und Behandeln für weitere 20 Minuten wird die Färbung beendet. Anschliessend wird das Leder wie üblich fertiggestellt.

Man erhält egal rotbraun gefärbtes Leder, bei dem die Narbenfehler gut abgedeckt sind. Die Färbungen zeichnen sich durch verbesserte Lichtechtheit aus gegenüber analog gefärbtem Leder ohne Verwendung von Pigmenten.

### Beispiel 2:

Arbeitet man wie im Beispiel 1 beschrieben, verwendet jedoch anstelle der dort eingesetzten Mischung der wasserlöslichen Farbstoffe eine Mischung, bestehend aus 4,2 Teilen des braunen Farbstoffes der Formel 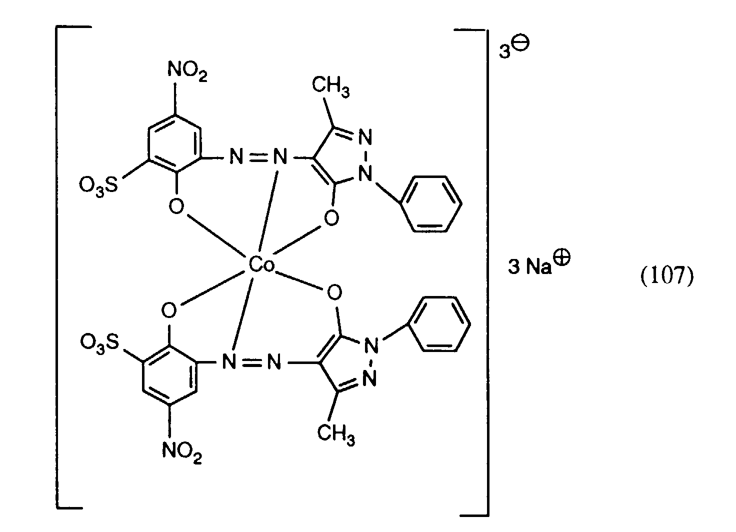 0,5 Teilen des im Beispiel 1 verwendeten braunen Farbstoffes der Formel (103) und 0,1 Teilen des im Beispiel 1 verwendeten roten Farbstoffes der Formel (102), sowie anstelle der dort eingesetzten Mischung der Pigmente eine Mischung, bestehend aus 1 Teil des gelben Pigmentes der Formel 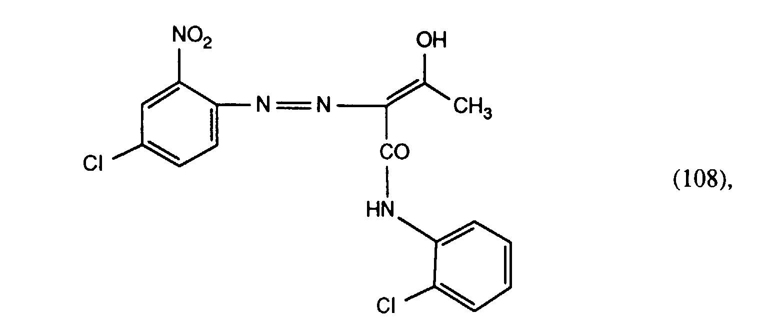 0,45 Teilen des im Beispiel 1 verwendeten braunen Pigmentes der Formel(106), 0,3 Teilen des im Beispiel 1 verwendeten roten Pigmentes der Formel (104), und 0,03 Teilen des im Beispiel 1 verwendeten blauen Pigmentes der Formel (105), so erhält man egal braun gefärbtes Leder, bei dem die Narbenfehler gut abgedeckt sind. Die Färbungen zeichnen sich durch verbesserte Lichtechtheit aus gegenüber analog gefärbtem Leder ohne Verwendung von Pigmenten.

### Beispiel 3:

100 Teile Möbelleder (wet white, 0,7 mm, gefalzt) werden in 100 Teilen Wasser und 4 Teilen eines Nachgerbmittels ( Gemisch aus chromsalzhaltigem Phenolsulfosäure-Kondensat und Natriumsalz von Polymethacrylsäure) bei 45°C während 20 Minuten nachgegerbt. Dann gibt man 0,5 Teile 24%igen Ammoniak zu und behandelt weitere 5 Minuten.

Danach setzt man der Flotte 1 Teil einer Zubereitung aus ethoxylierten Fettaminen und Fettalkoholen, 0,8 Teile des grünen Farbstoffes der Formel 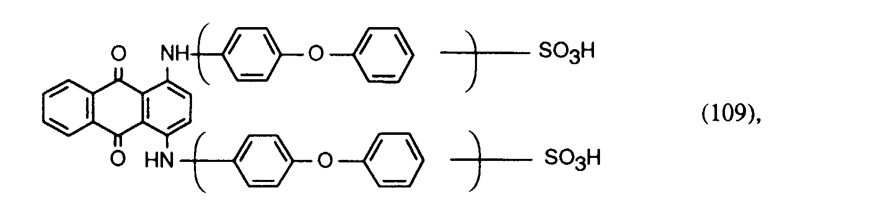 0,54 Teile des grünen Farbstoffes der Formel 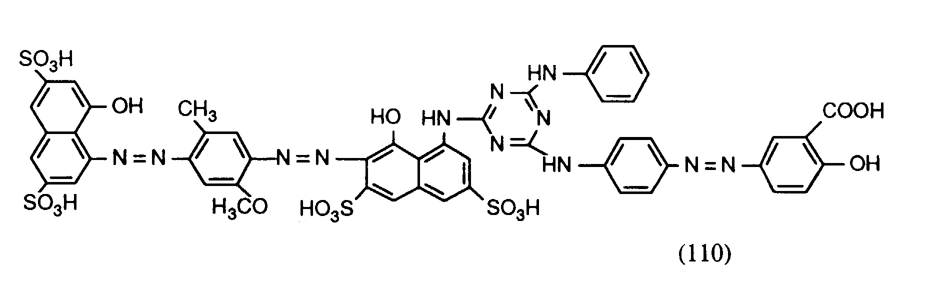 und 0,54 Teile des gelben Farbstoffes der Formel 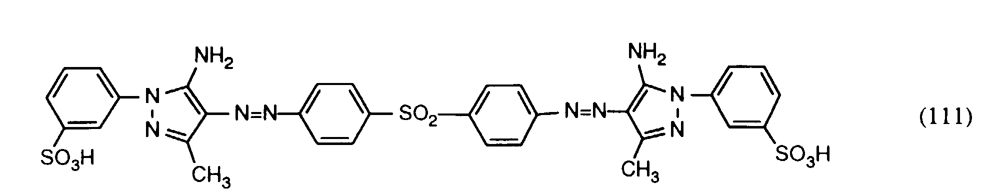 zu und färbt während 40 Minuten. Anschliessend fügt man 17 Teile eines Fettungsmittelgemisches zu und behandelt weitere 90 Minuten. Dann gibt man 1 Teil 85 %ige Ameisensäure zu und noch zweimal nach jeweils weiteren 20 Minuten noch je 1 Teil 85 %ige Ameisensäure, so dass ein pH-Wert von ca. 3,5 erreicht ist. Man behandelt über Nacht und lässt dann die Flotte ablaufen.

Dann gibt man zu dem Leder 200 Teile Wasser von 45°C und 0,5 Teile 85 %ige Ameisensäure und nach 10 Minuten 1 Teil eines Oberflächenfettungsmittels sowie 1 Teil eines polyquaternären Amin-Ethylenoxid- Adduktes und behandelt weitere 20 Minuten bei 45°C. Danach setzt man 1,5 Teile des im Beispiel 1 verwendeten blauen Pigmentes der Formel (105), 0,3 Teile des im Beispiel 1 verwendeten braunen Pigmentes der Formel (106) und 0,4 Teile des im Beispiel 2 verwendeten gelben Pigmentes der Formel (108) und nach 20 minütigem Behandeln 0,5 Teile 85 %ige Ameisensäure zu. Nach weiteren 20 Minuten lässt man die Flotte ablaufen, gibt dann 200 Teile Wasser und die oben eingesetzten beiden grünen und den gelben Farbstoff in jeweils der Hälfte der dort eingesetzten Menge zu und färbt weitere 20 Minuten bei dieser Temperatur. Durch Zusatz von 0,8 Teilen 85 %iger Ameisensäure und Behandeln für weitere 20 Minuten wird die Färbung beendet.

Man lässt die Flotte ablaufen, gibt dann zu dem Leder 150 Teile Wasser von 25°C, 0,3 Teile 85 %ige Ameisensäure und 0,5 Teile eines polyquaternären Amin-Ethylenoxid-Adduktes und behandelt weitere 15 Minuten.

Durch Zusatz von 0,8 Teilen 85 %iger Ameisensäure und Behandeln für weitere 30 Minuten wird die Färbung beendet. Anschliessend wird das Leder wie üblich fertiggestellt.

Man erhält egal grün gefärbtes Leder, bei dem die Narbenfehler gut abgedeckt sind. Die Färbungen zeichnen sich durch verbesserte Lichtechtheit aus gegenüber analog gefärbtem Leder ohne Verwendung von Pigmenten.

### Beispiel 4:

100 Teile Möbelleder (wet blue, Falzstärke 1,1 mm) werden auf übliche Weise nachgegerbt, vorgefettet und neutralisiert (pH 6,6). Anschliessend folgt eine 15 Minuten dauernde Waschoperation in 300 Teilen Wasser bei Raumtemperatur.

Das derart behandelte Leder wird nun in einer frisch angesetzten Flotte aus 100 Teilen Wasser von 30°C und 4 Teilen eines Nachgerbmittels (Proteinhaltiges Formaldehyd-Kondensationsprodukt phenolischer Sulfosäuren) 20 Minuten behandelt. Dann gibt man 1 Teil 24 %igen Ammoniak und nach 5 Minuten 1 Teil einer Zubereitung aus ethoxylierten Fettaminen und Fettalkoholen zu und setzt die Behandlung noch weitere 10 Minuten fort. Man fügt danach 1,05 Teile des im Beispiel 1 eingesetzten roten Farbstoffes der Formel (102), 2,1 Teile des im Beispiel 1 eingesetzten braunen Farbstoffes der Formel (103) und 0,3 des im Beispiel 2 eingesetzten braunen Farbstoffes der Formel (107) zu und färbt während 60 Minuten. Dann fügt man 100 Teile Wasser von 60°C zu und nach 10 Minuten 10 Teile eines Fettungsmittelgemisches zu und behandelt weitere 45 Minuten. Anschliessend setzt man 1 Teil 85 %ige Ameisensäure zu und noch zweimal nach jeweils weiteren 10 Minuten noch je 1,5 Teile 85 %ige Ameisensäure, so dass ein pH-Wert von ca. 3,6 erreicht ist. Man behandelt 30 Minuten und lässt dann die Flotte ablaufen.

Dann gibt man zu dem Leder 200 Teile Wasser und 2 Teile eines chromsalzhaltigen Phenolsulfosäure-Kondensates und behandelt 15 Minuten bei 50°C. Nach Zufügen von 1 Teil eines Oberflächenfettungsmittels und 15 minütiger Behandlung bei pH 3,6 setzt man 2 Teile des im Beispiel 1 verwendeten braunen Pigmentes der Formel (106) und 0,1 Teile des im Beispiel 1 verwendeten blauen Pigmentes der Formel (105) zu und färbt weitere 15 Minuten bei dieser Temperatur. Durch Zusatz von ca. 0,25 Teilen 85 %iger Ameisensäure zur Einstellung eines pH-Wertes von 3,4 und Behandeln für weitere 20 Minuten wird die Färbung beendet. Anschliessend wird das Leder wie üblich fertiggestellt.

Man erhält egal rotbraun gefärbtes Leder, bei dem die Narbenfehler gut abgedeckt sind. Die Färbungen zeichnen sich durch verbesserte Lichtechtheit aus gegenüber analog gefärbtem Leder ohne Verwendung von Pigmenten.

### Beispiel 5:

Arbeitet man wie im Beispiel 1 beschrieben, verwendet jedoch anstelle der dort eingesetzten Mischung der wasserlöslichen Farbstoffe eine Mischung, bestehend aus 1,92 Teilen des im Beispiel 1 verwendeten gelben Farbstoffes der Formel (101), 2,0 Teilen des im Beispiel 1 verwendeten roten Farbstoffes der Formel (102) und 2,0 Teilen des blauen Farbstoffes der Formel 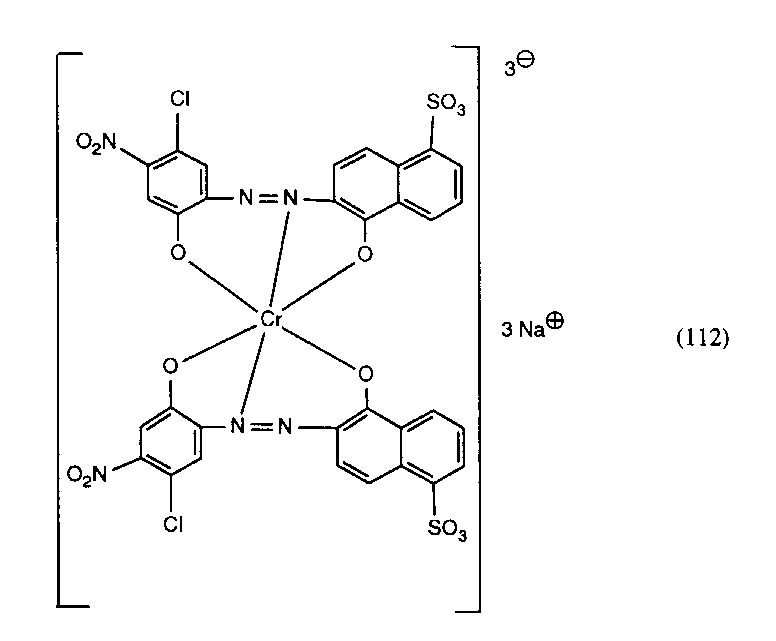 sowie die dort eingesetzte Mischung der Pigmente, so erhält man ebenfalls egal rotbraun gefärbtes Leder, bei dem die Narbenfehler gut abgedeckt sind. Die Färbungen zeichnen sich durch verbesserte Lichtechtheit aus gegenüber analog gefärbtem Leder ohne Verwendung von Pigmenten.

## Patentansprüche

1. Verfahren zum Färben von Leder mit Farbstoffmischungen, dadurch gekennzeichnet, dass man das Leder mit mindestens zwei wasserlöslichen Farbstoffen und mit mindestens zwei in Wasser praktisch unlöslichen Pigmenten färbt, wobei man die Farbstoffe und Pigmente so auswählt, dass die Mischung der Farbstoffe und die Mischung der Pigmente die gleiche Nuance auf dem Leder ergeben.

2. Verfahren gemäss Anspruch 1, dadurch gekennzeichnet, dass man mindestens zwei wasserlösliche Farbstoffe verwendet, ausgewählt aus einer Gruppe von zum Trichromiefärben geeigneten wasserlöslichen Farbstoffen.

3. Verfahren gemäss Anspruch 2, dadurch gekennzeichnet, dass man mindestens zwei metallfreie Farbstoffe mit jeweils zwei Sulfo- oder Carboxygruppen und einem Molekulargewicht zwischen 790 und 1100 einsetzt.

4. Verfahren gemäss Anspruch 3, dadurch gekennzeichnet, dass man mindestens zwei Farbstoffe verwendet, ausgewählt aus der Gruppe, bestehend aus
a) einem gelben Farbstoff der Formel 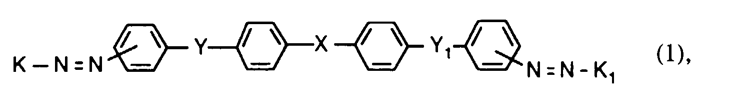 worin
Y und Y₁ unabhängig voneinander je -SO₂O-, -COO-, -CONH- oder -SO₂NH-, X -C₁-C₄-Alkylen-, -CH=CH-, -O-, -S-, -SO₂-, -NH-, 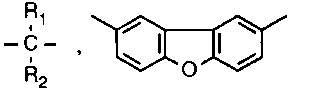 oder 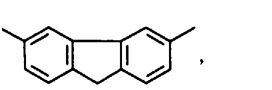 wobei R₁ und R₂ unabhängig voneinander je C₁-C₄-Alkyl bedeuten, und
K und K₁ unabhängig voneinander je eine Kupplungskomponente der Formel 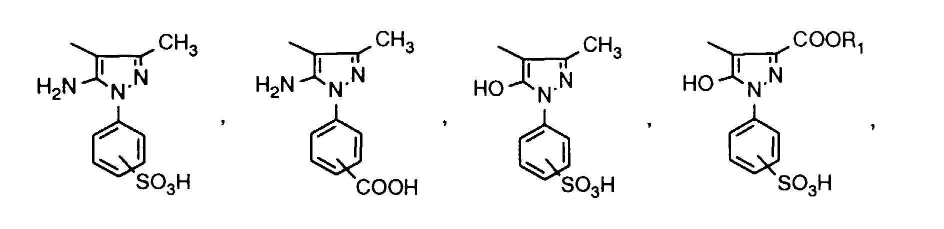 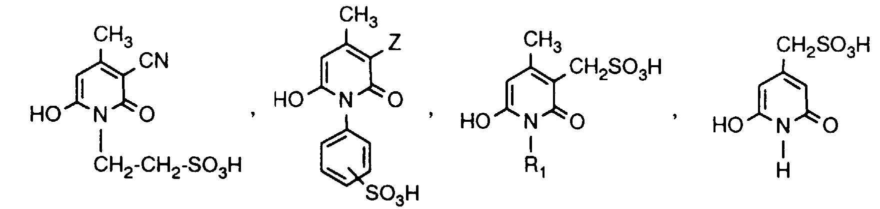 oder 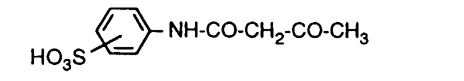 bedeuten, worin Z CN, COOH, COONH₂ oder COOR₁ bedeutet,
b) einem roten Farbstoff der Formel 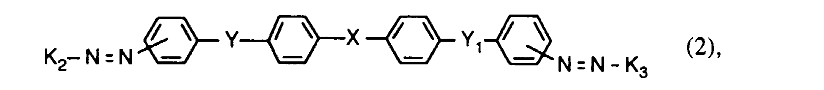
worin K₂ und K₃ unabhängig voneinander je eine Kupplungskomponente der Formel 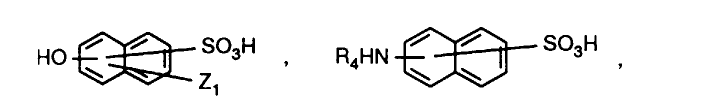 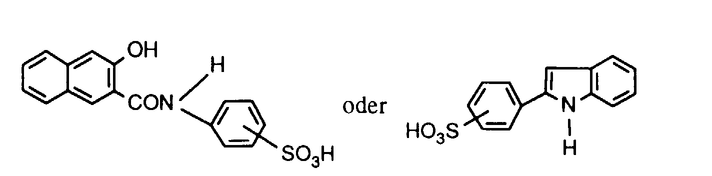 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann, und
R₄ Wasserstoff oder Phenyl bedeutet,
und
c) einem blauen Farbstoff der Formel 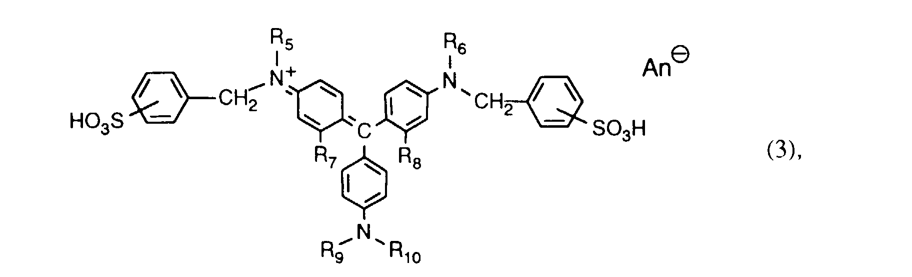 worin
R₅, R₆, R₇, R₈ und R₉ unabhängig voneinander je Wasserstoff oder C₁-C₄-Alkyl sind, R₁₀ Wasserstoff, Phenyl oder durch C₁-C₄-Alkyl oder C₁-C₄-Alkoxy substituiertes Phenyl und An^{⊖} ein farbloses Anion bedeutet,
oder der Formel 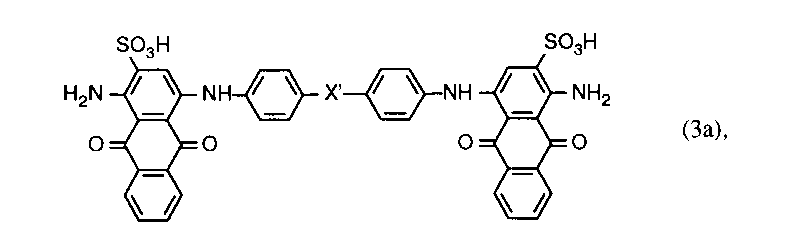 worin X' -C₁-C₄-Alkylen-, -CH=CH-, -O-, -S-, -SO₂-, -NH-, 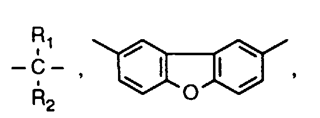 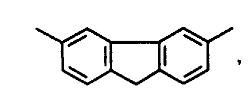 -NH-CO-, -NH-SO₂- oder -NH-CO-NH- ist, wobei R₁ und R₂ unabhängig voneinander je C₁-C₄-Alkyl bedeuten.

5. Verfahren gemäss Anspruch 4, dadurch gekennzeichnet, dass man zum Trichromiefärben eine Mischung von wasserlöslichen Farbstoffen verwendet, enthaltend einen gelben Farbstoff der Formel (1), einen roten Farbstoff der Formel (2) und einen blauen Farbstoff der Formel (3) oder (3a).

6. Verfahren gemäss einem der Ansprüche 1 bis 5, dadurch gekennzeichnet, dass man einen gelben Farbstoff der Formel (1) verwendet, worin Y und Y₁ je -SO₂O- bedeuten.

7. Verfahren gemäss einem der Ansprüche 1 bis 6, dadurch gekennzeichnet, dass man einen gelben Farbstoff der Formel (1) verwendet, worin X 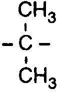 bedeutet.

8. Verfahren gemäss einem der Ansprüche 1 bis 7, dadurch gekennzeichnet, dass man einen gelben Farbstoff der Formel (1) verwendet, worin K und K₁ je eine Kupplungskomponente der Formel 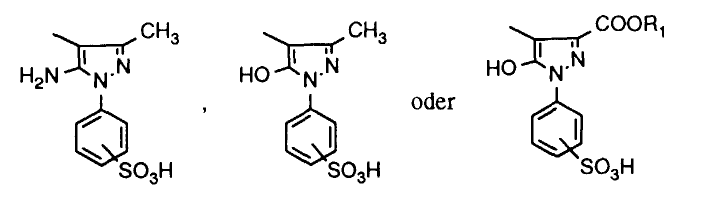 bedeuten.

9. Verfahren gemäss einem der Ansprüche 1 bis 8, dadurch gekennzeichnet, dass man den gelben Farbstoff der Formel 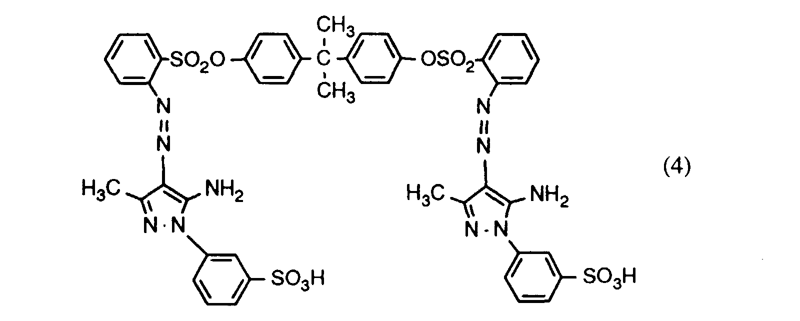 verwendet.

10. Verfahren gemäss einem der Ansprüche 1 bis 9, dadurch gekennzeichnet, dass man einen roten Farbstoff der Formel (2) verwendet, worin Y und Y₁ je -SO₂O- bedeuten.

11. Verfahren gemäss einem der Ansprüche 1 bis 10, dadurch gekennzeichnet, dass man
einen roten Farbstoff der Formel (2) verwendet, worin X 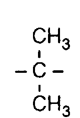 bedeutet.

12. Verfahren gemäss einem der Ansprüche 1 bis 11, dadurch gekennzeichnet, dass man einen roten Farbstoff der Formel (2) verwendet, worin K₂ und K₃ je eine Kupplungskomponente der Formel 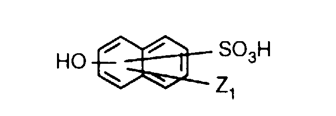 bedeuten, worin Z₁ Wasserstoff, OH oder NHR₃ ist, wobei R₃ Wasserstoff, C₁-C₄-Alkyl, Cyan-C₂-C₄-Alkyl, C₁-C₄-Alkylcarbonyl, Aminocarbonyl, Phenylcarbonyl oder Phenyl bedeutet, wobei die Phenylgruppe in den beiden letzgenannten Resten durch C₁-C₄-Alkyl substituiert sein kann.

13. Verfahren gemäss einem der Ansprüche 1 bis 12, dadurch gekennzeichnet, dass man den roten Farbstoff der Formel 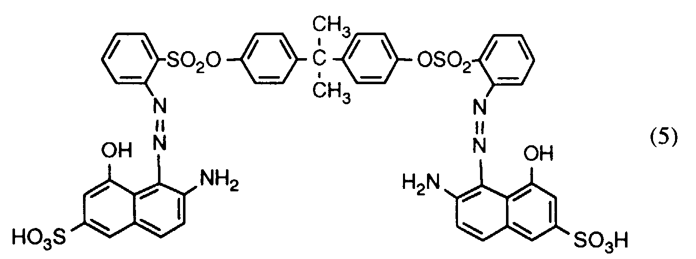 verwendet.

14. Verfahren gemäss einem der Ansprüche 1 bis 13, dadurch gekennzeichnet, dass man einen blauen Farbstoff der Formel (3) verwendet, worin R₅, R₆, R₇, R₈ und R₉ unabhängig voneinander je Wasserstoff oder C₁-C₂-Alkyl und R₁₀ Wasserstoff, Phenyl oder durch C₁-C₂-Alkyl oder C₁-C₂-Alkoxy substituiertes Phenyl bedeutet, oder der Formel (3a), worin X' -C₁-C₄-Alkylen-, -CH=CH-, 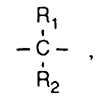 -NH-CO- oder -NH-CO-NH- ist, wobei R₁ und R₂ unabhängig voneinander je C₁-C₄-Alkyl bedeuten.

15. Verfahren gemäss Anspruch 14, dadurch gekennzeichnet, dass man einen blauen Farbstoff der Formel (3) verwendet, worin R₅ und R₆ unabhängig voneinander je C₁-C₂-Alkyl, R₇ und R₈ unabhängig voneinander je Wasserstoff oder C₁-C₂-Alkyl, R₉ Wasserstoff und R₁₀ Phenyl oder durch C₁-C₂-Alkyl oder C₁-C₂-Alkoxy substituiertes Phenyl bedeutet, oder einen blauen Farbstoff der Formel (3a), worin X' -C₁-C₄-Alkylen-oder 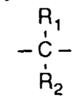 ist, wobei R₁ und R₂ unabhängig voneinander je C₁-C₄-Alkyl bedeuten.

16. Verfahren gemäss einem der Ansprüche 1 bis 15, dadurch gekennzeichnet, dass man den blauen Farbstoff der Formel 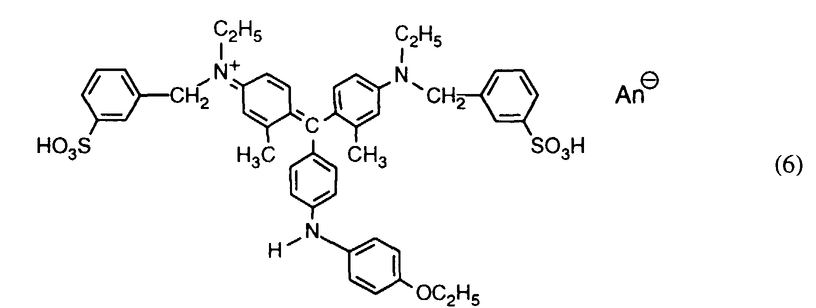 oder der Formel 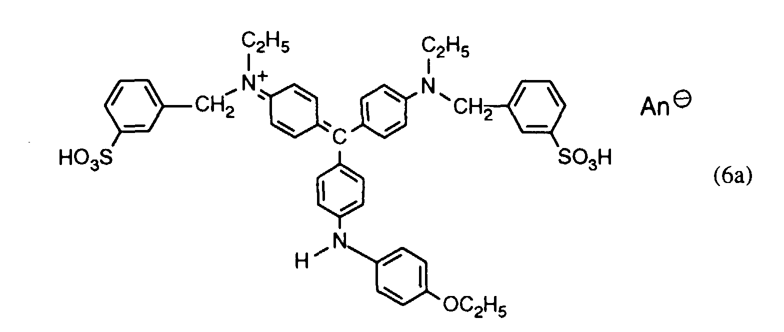 oder der Formel 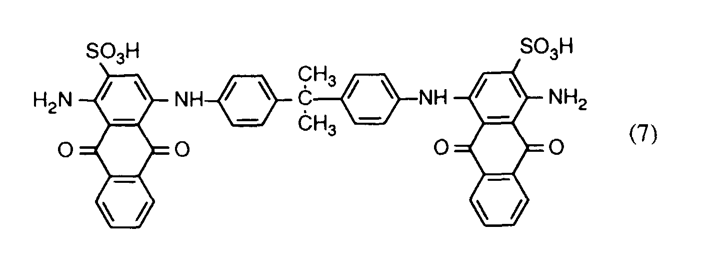 oder der Formel 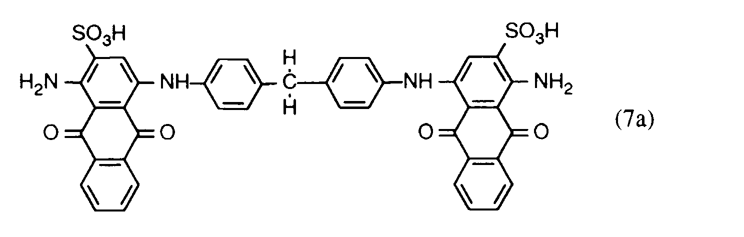 verwendet.

17. Verfahren gemäss einem der Ansprüche 1 bis 16, dadurch gekennzeichnet, dass man zum Trichromiefärben eine Farbstoffmischung, enthaltend den gelben Farbstoff der Formel (4), den roten Farbstoff der Formel (5) und den blauen Farbstoff der Formel (6), (6a), (7) oder (7a), verwendet.

18. Verfahren gemäss Anspruch 2, dadurch gekennzeichnet, dass man als wasserlösliche Farbstoffe symmetrische 1:2-Komplexe der Formel 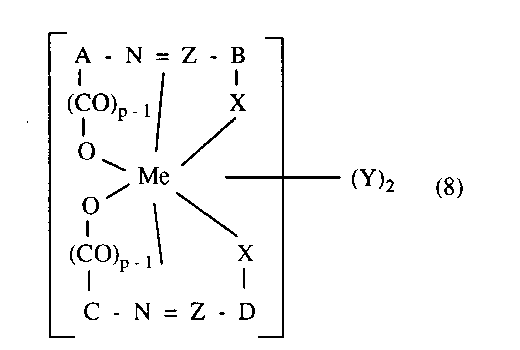 verwendet, worin
Z Stickstoff oder eine CH-Gruppe,
A und C identische Reste der Benzol- oder Naphthalinreihe, welche in o-Stellung zur Azo oder Azomethingruppe eine Hydroxy- oder Carboxygruppe enthalten,
B und D identische Reste einer Kupplungskomponente, wenn Z Stickstoff ist, wobei die Kupplungskomponente in o- oder α-Stellung zur Azogruppe die Gruppe X enthält, oder identische Reste eines o-Hydroxyaldehyds, wenn Z die CH-Gruppe darstellt,
X Sauerstoff oder eine Gruppe -NQ-, worin Q Wasserstoff oder C₁-C₄-Alkyl bedeutet,
Me Chrom oder Kobalt,
Y die SO₃H-Gruppe und
p 1 oder 2 bedeutet,
und worin die Farbstoffe
a) keine oder nur eine geringe Neigung zur Aggregation in elektrolythaltiger, wässriger Lösung zeigen und
b) auf Standard-Chromleder eine Eindringtiefe zwischen 20 und 200 µm aufweisen, wobei die Unterschiede in der Eindringtiefe der einzelnen Farbstoffe des Gemisches innerhalb von 50 µm liegen.

19. Verfahren gemäss Anspruch 18, dadurch gekennzeichnet, dass man Farbstoffe der Formel (8) verwendet, worin X Sauerstoff ist.

20. Verfahren gemäss Anspruch 18 oder 19, dadurch gekennzeichnet, dass man Farbstoffe der Formel (8) verwendet, worin p gleich 1 ist.

21. Verfahren gemäss einem der Ansprüche 18 bis 20, dadurch gekennzeichnet, dass man Farbstoffe der Formel (8) verwendet, worin A und C jeweils den Rest eines 1-Hydroxy-2-aminobenzols bedeuten, welcher gegebenenfalls ein- oder mehrmals durch gleiche oder verschiedene Substituenten aus der Reihe Nitro, Sulfo, Chlor, Methyl oder Methoxy substituiert ist.

22. Verfahren gemäss einem der Ansprüche 18 bis 21, dadurch gekennzeichnet, dass man Farbstoffe der Formel (8) verwendet, worin A und C jeweils den Rest eines 1-Hydroxy-2-aminobenzols bedeuten, der in 4- oder 5- Stellung eine Nitrogruppe trägt, oder den Rest eines l-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt.

23. Verfahren gemäss einem der Ansprüche 18 bis 22, dadurch gekennzeichnet, dass man Farbstoffe der Formel (8) verwendet, worin B und D jeweils den Rest einer der folgenden Kupplungskomponenten bedeuten:
gegebenenfalls durch C₁-C₄-Alkyl oder C₁-C₄-Alkoxy, Amino oder Acylamino substituiertes in o-Stellung kuppelndes Phenol,
Resorcin,
m-Phenylendiamin, das gegebenenfalls in 4-Stellung durch Sulfo, Chlor, Methyl oder Methoxy substituiert ist,
Naphthole, die gegebenenfalls mit C₁-C₄-Alkyl oder C₁-C₄-Alkoxy, Chlor, Amino, Acylamino oder Sulfo substituiert sind,
5-Pyrazolone oder 5-Aminopyrazole, die in 1-Stellung einen gegebenenfalls mit Chlor, Nitro, C₁-C₄-Alkyl-, C₁-C₄-Alkoxy- oder Sulfogruppen substituierten Phenyl- oder Naphthylrest besitzen und in 3-Stellung eine C₁-C₄-Alkylgruppe, insbesondere eine Methylgruppe, aufweisen,
Acetessigsäureamide, Acetessigsäureanilide und Benzoylessigsäureanilide, die im Anilidkern gegebenenfalls mit Chlor, C₁-C₄-Alkyl-, C₁-C₄-Alkoxy- oder Sulfogruppen substituiert sein können,
6-Hydroxy-3-cyano- oder 6-Hydroxy-3-carbonamido-4-alkyl-2-pyridone, die in 1-Stellung durch gegebenenfalls substituiertes C₁-C₄-Alkyl, z.B. Methyl, Isopropyl, β-Hydroxyethyl, β-Aminoethyl oder γ-Isopropoxypropyl oder durch Phenyl substituiert sind und in 4-Stellung eine C₁-C₄-Alkylgruppe, insbesondere eine Methylgruppe, aufweisen.

24. Verfahren gemäss Anspruch 23, dadurch gekennzeichnet, dass man Farbstoffe der Formel (8) verwendet, worin B und D jeweils den Rest einer der folgenden Kupplungskomponenten bedeuten:
p-C₁-C₄-Alkylphenol, Resorcin, m-Phenylendiamin, 1- oder 2-Naphthol, gegebenenfalls mit Sulfo substituiert, 1-Phenyl-3-methyl-5-pyrazolon oder Acetessigsäureanilid, wobei die Phenylgruppe in den beiden letztgenannten Verbindungen durch Chlor, C₁-C₄-Alkyl, C₁-C₄-Alkoxy oder Sulfo substituiert sein kann.

25. Verfahren gemäss Anspruch 18, dadurch gekennzeichnet, dass man als wasserlösliche Farbstoffe symmetrische 1:2- Komplexe der Formel 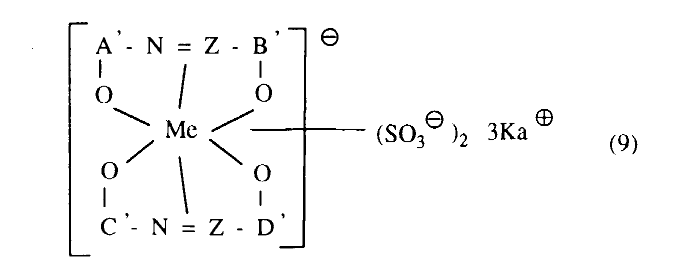 verwendet, worin
Z Stickstoff oder eine CH-Gruppe,
A' und C' jeweils den Rest den Rest eines 1-Hydroxy-2-aminobenzols bedeuten, der in 4- oder 5- Stellung eine Nitrogruppe trägt, oder den Rest eines 1-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt,
B' und D' jeweils den Rest einer der folgenden Kupplungskomponenten bedeuten, falls Z Stickstoff ist: p-C₁-C₄-Alkylphenol, Resorcin, m-Phenylendiamin, 1- oder 2-Naphthol, gegebenenfalls mit Sulfo substituiert, 1-Phenyl-3-methyl-5-pyrazolon oder Acetessigsäureanilid, wobei die Phenylgruppe in den beiden letztgenannten Verbindungen durch Chlor, C₁-C₄-Alkyl, C₁-C₄-Alkoxy oder Sulfo substituiert sein kann, oder, falls Z die CH-Gruppe bedeutet, den Rest eines o- Hydroxybenzaldehyds oder o-Hydroxynaphthaldehyds, die durch Phenylazo oder Sulfophenylazo substituiert sein können,
Me Kobalt oder Chrom und
Ka^{⊕} ein Kation bedeutet.

26. Verfahren gemäss Anspruch 18, dadurch gekennzeichnet, dass man mindestens drei wasserlösliche Farbstoffe der Formel (8) verwendet.

27. Verfahren gemäss einem der Ansprüche 18 bis 26, dadurch gekennzeichnet, dass man eine Mischung von wasserlöslichen Farbstoffen verwendet, enthaltend
a) einen Farbstoff der Formel 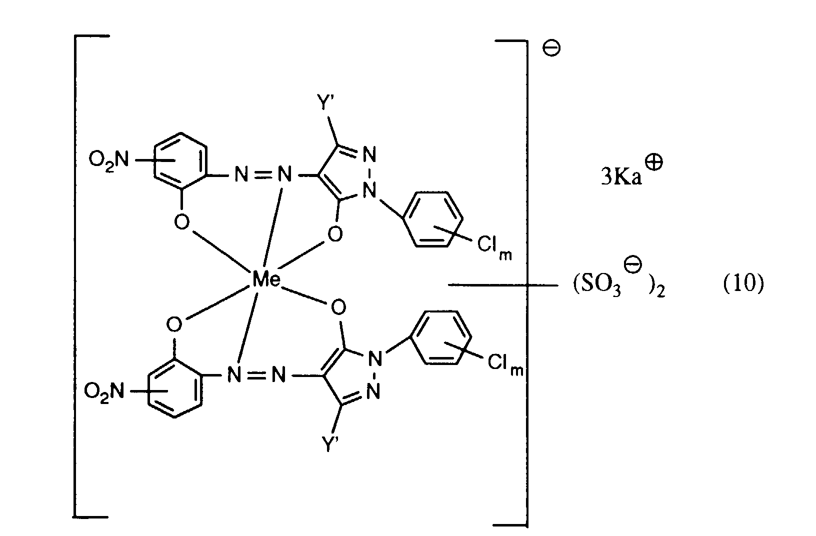 worin m eine ganze Zahl von 0 bis 2, Me Kobalt oder Chrom, Ka^{⊕} ein Kation und Y' Methyl, -CONH₂ oder -CONHR₁ bedeutet, wobei R₁ C₁-C₄-Alkyl bedeutet,
b) einen Farbstoff der Formel 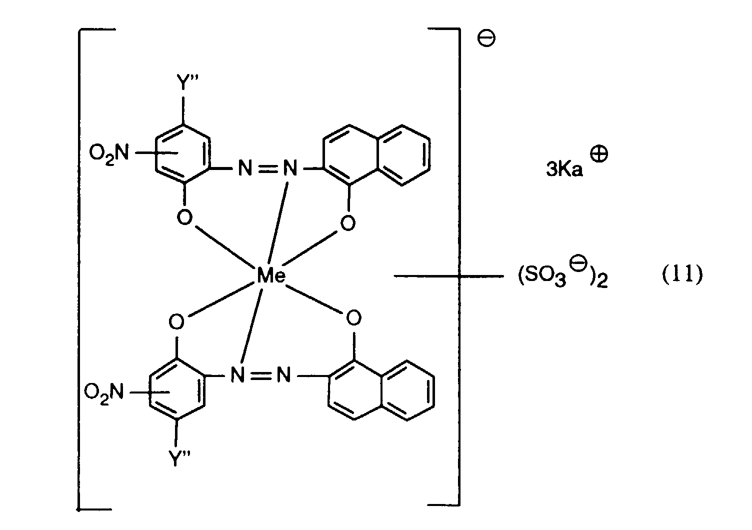 worin Y'' Wasserstoff, Chlor, Methyl oder Methoxy, Me Kobalt oder Chrom und Ka^{⊕} ein Kation bedeutet, sowie
c) einen weiteren Farbstoff der oben angegebenen Formel (10) oder einen Farbstoff der Formel 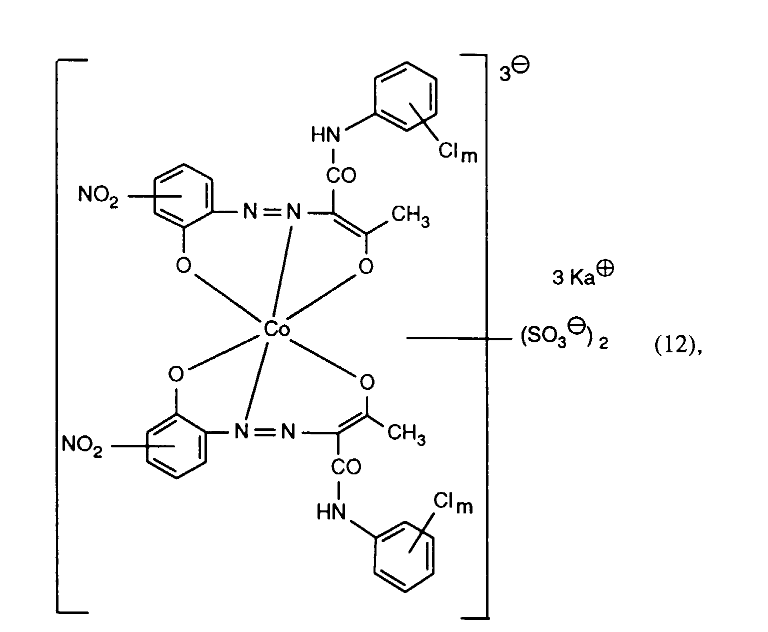 worin m eine ganze Zahl von 0 bis 2 und Ka^{⊕} ein Kation bedeutet.

28. Verfahren gemäss einem der Ansprüche 1 bis 27, dadurch gekennzeichnet, dass man mindestens zwei Pigmente verwendet, ausgewählt aus einer Gruppe von zum Trichromiefärben geeigneten Pigmenten.

29. Verfahren gemäss Anspruch 28, dadurch gekennzeichnet, dass man Pigmente verwendet, ausgewählt aus der Gruppe, bestehend aus
a) gelben Pigmenten der Formel 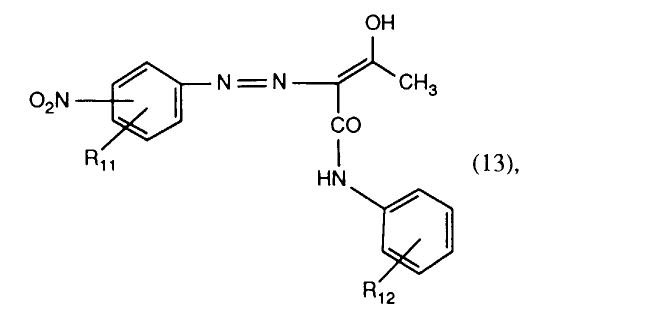 worin R₁₁ und R₁₂ unabhängig voneinander je Wasserstoff, C₁-C₄-Alkyl, C₁-C₄-Alkoxy oder Halogen bedeuten,
b) roten Pigmenten der Formel 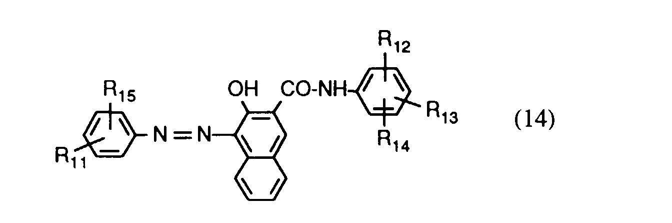 worin R₁₁, R₁₂, R₁₃ und R₁₄ unabhängig voneinander je Wasserstoff, C₁-C₄-Alkyl, C₁-C₄-Alkoxy oder Halogen und R₁₅ einen Rest der Formel -SO₂-N(R₁₆)₂ bedeuten, wobei R₁₆ gegebenenfalls substituiertes C₁-C₄-Alkyl ist, und
c) dem blauen Pigment der Formel

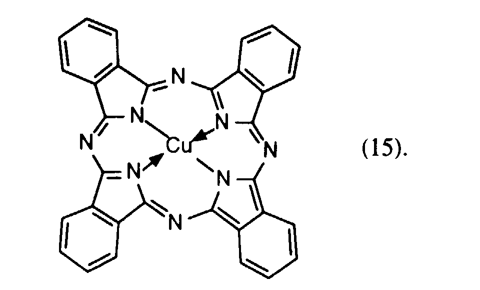

30. Verfahren gemäss einem der Ansprüche 1 bis 29, dadurch gekennzeichnet, dass man ein braunes Pigment der Formel 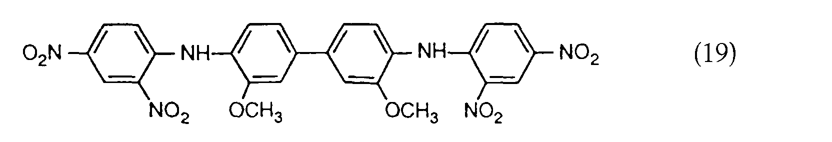 verwendet.

31. Verfahren gemäss einem der Ansprüche 1 bis 30, dadurch gekennzeichnet, dass man das gelbe Pigment der Formel 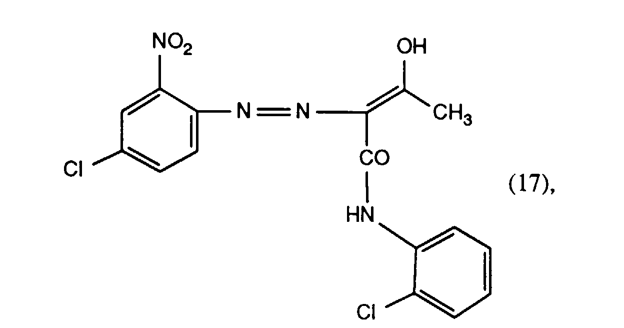 das rote Pigment der Formel 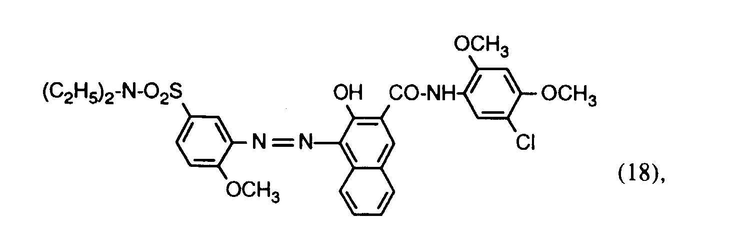 das blaue Pigment der Formel 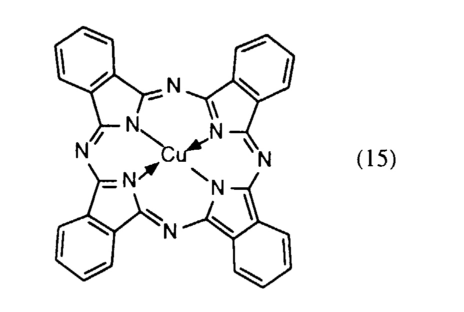 oder das braune Pigment der Formel 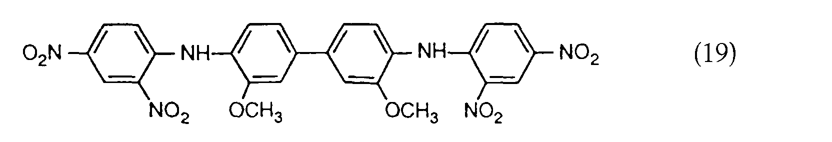 verwendet.

32. Verfahren gemäss einem der Ansprüche 1 bis 31, dadurch gekennzeichnet, dass man vor oder während Behandlung mit den Pigmenten das Leder mit einem kationischen Hilfsmittel behandelt.

33. Verfahren gemäss Anspruch 32, dadurch gekennzeichnet, dass man als kationische Hilfsmittel polyquaternäre Amin-Ethylenoxid-Addukte, kationische Zubereitungen auf Basis chlorierter Kohlenwasserstoffe und n-Alkylderivaten oder kationische chromhaltige Phenolsulfosäure-Kondensate verwendet.

34. Verfahren gemäss Anspruch 33, dadurch gekennzeichnet, dass man als kationische Hilfsmittel kationische chromhaltige Phenolsulfosäure-Kondensate verwendet.

35. Das nach dem Verfahren gemäss den Ansprüchen 1 - 34 gefärbte Leder.

## Claims

1. A method of dyeing leather with dye mixtures, wherein the leather is dyed with at least two water-soluble dyes and with at least two pigments that are practically insoluble in water, the dyes and pigments being so selected that the mixture of dyes and the mixture of pigments impart the same shade to the leather.

2. A method according to claim 1, wherein there are used at least two water-soluble dyes selected from a group of water-soluble dyes suitable for trichromatic dyeing.

3. A method according to claim 2, wherein at least two metal-free dyes are employed, each containing two sulfo or carboxy groups and having a molecular weight of from 790 to 1100.

4. A method according to claim 3, wherein there are used at least two dyes selected from the group consisting of
a) a yellow dye of formula 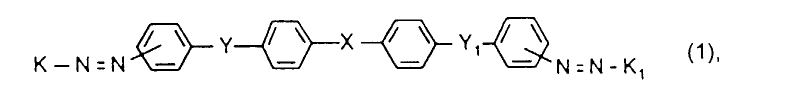 wherein
Y and Y₁ are each independently of the other -SO₂O-, -COO-, -CONH- or -SO₂NH-, X is -C₁-C₄alkylene-, -CH=CH-, -O-, -S-, -SO₂-, -NH-, 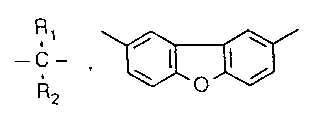 or 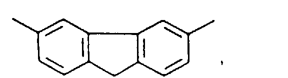 with R₁ and R₂ being each independently of the other C₁-C₄alkyl, and
K and K₁ are each independently of the other a coupling component of formula 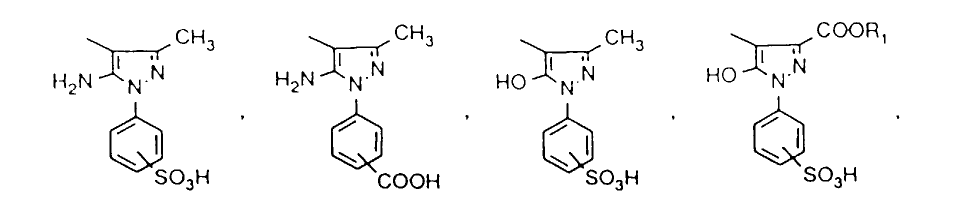 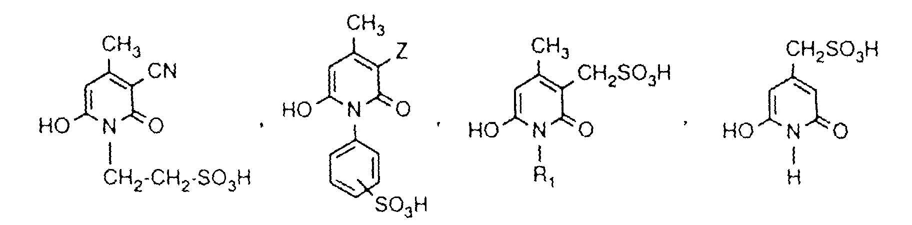 or 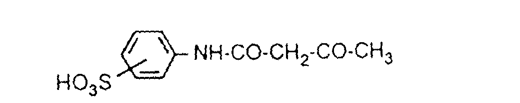 wherein Z is CN, COOH, COONH₂ or COOR₁,
b) a red dye of formula 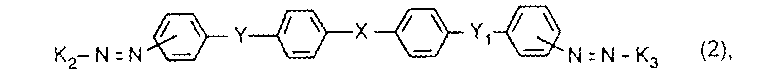
wherein K₂ and K₃ are each independently of the other a coupling component of formula 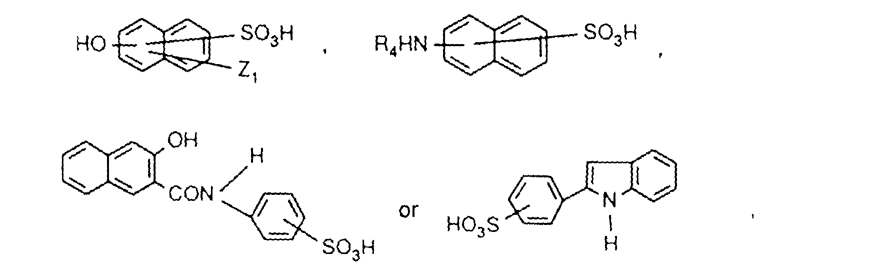 wherein Z₁ is hydrogen, OH or NHR₃, with R₃ being hydrogen, C₁-C₄alkyl, cyano-C₂-C₄alkyl, C₁-C₄alkylcarbonyl, aminocarbonyl, phenylcarbonyl or phenyl, it being possible for the phenyl group in the two last-mentioned radicals to be substituted by C₁-C₄alkyl, and
R₄ is hydrogen or phenyl,
and
c) a blue dye of formula 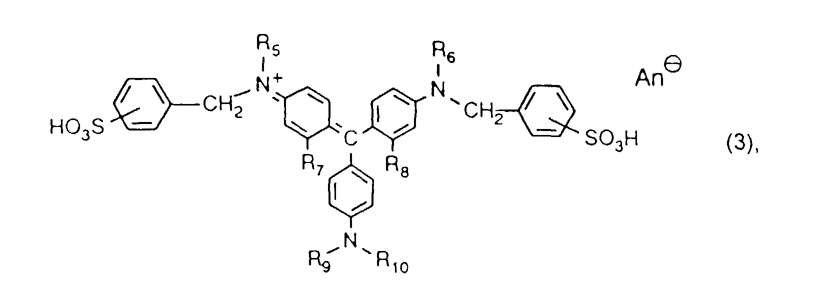 wherein
R₅, R₆, R₇, R₈ and R₉ are each independently of the others hydrogen or C₁-C₄alkyl, R₁₀ is hydrogen, phenyl or phenyl substituted by C₁-C₄alkyl or by C₁-C₄alkoxy and An^{⊖} is a colourless anion,
or of formula 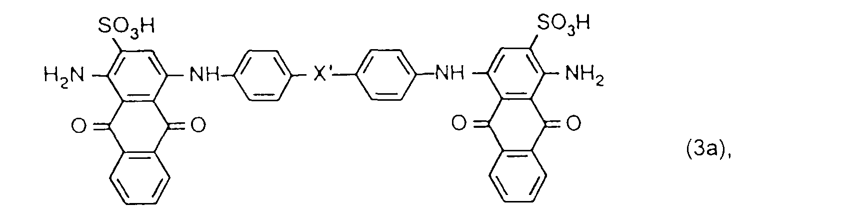
wherein X' is -C₁-C₄alkylene-, -CH=CH-, -O-, -S-, -SO₂-, -NH-, 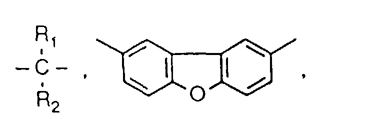 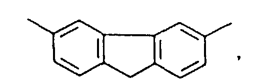 -NH-CO-, -NH-SO₂- or -NH-CO-NH-, with R₁ and R₂ being each independently of the other C₁-C₄alkyl.

5. A method according to claim 4, wherein there is used, for trichromatic dyeing, a mixture of water-soluble dyes comprising a yellow dye of formula (1), a red dye of formula (2) and a blue dye of formula (3) or (3a).

6. A method according to any one of claims 1 to 5, wherein there is used a yellow dye of formula (1) wherein each of Y and Y₁ is -SO₂O-.

7. A method according to any one of claims 1to 6, wherein there is used a yellow dye of formula (1) wherein X is

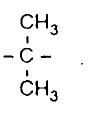

8. A method according to any one of claims 1 to 7, wherein there is used a yellow dye of formula (1) wherein each of K and K₁ is a coupling component of formula

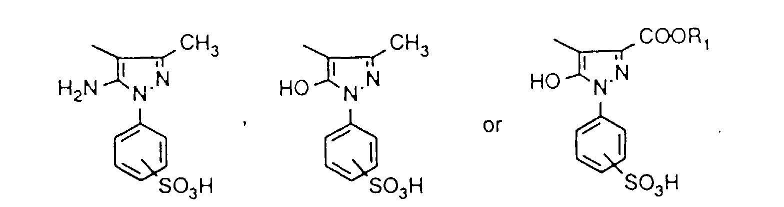

9. A method according to any one of claims 1 to 8, wherein there is used the yellow dye of formula

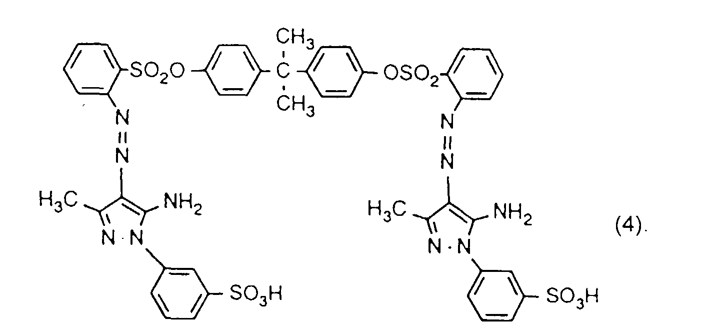

10. A method according to any one of claims 1 to 9, wherein there is used a red dye of formula (2) wherein each of Y and Y₁ is -SO₂O-.

11. A method according to any one of claims 1 to 10, wherein there is used a red dye of formula (2) wherein X is is

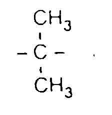

12. A method according to any one of claims 1 to 11, wherein there is used a red dye of formula (2) wherein each of K₂ and K₃ is a coupling component of formula 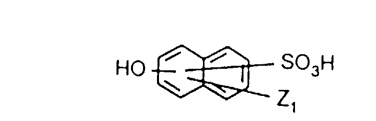 wherein Z₁ is hydrogen, OH or NHR₃, with R₃ being hydrogen, C₁-C₄alkyl, cyano-C₂-C₄alkyl, C₁-C₄alkylcarbonyl, aminocarbonyl, phenylcarbonyl or phenyl, it being possible for the phenyl group in the two last-mentioned radicals to be substituted by C₁-C₄alkyl.

13. A method according to any one of claims 1 to 12, wherein there is used the red dye of formula

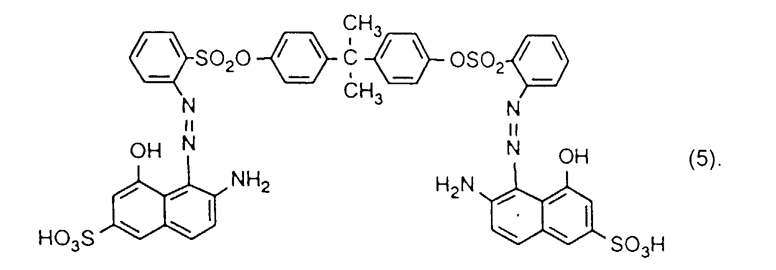

14. A method according to any one of claims 1 to 13, wherein there is used a blue dye of formula (3) wherein R₅, R₆, R₇, R₈ and R₉ are each independently of the others hydrogen or C₁-C₂alkyl and R₁₀ is hydrogen, phenyl or phenyl substituted by C₁-C₂alkyl or by C₁-C₂alkoxy, or of formula (3a) wherein X' is -C₁-C₄alkylene-, -CH=CH-, 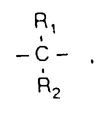 -NH-CO- or -NH-CO-NH-, with R₁ and R₂ being each independently of the other C₁-C₄alkyl.

15. A method according to claim 14, wherein there is used a blue dye of formula (3) wherein R₅ and R₆ are each independently of the other C₁-C₂alkyl, R₇ and R₈ are each independently of the other hydrogen or C₁-C₂alkyl, R₉ is hydrogen and R₁₀ is phenyl or phenyl substituted by C₁-C₂alkyl or by C₁-C₂alkoxy, or a blue dye of formula (3a) wherein X' is -C₁-C₄alkylene- or 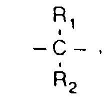 with R₁ and R₂ being each independently of the other C₁-C₄alkyl.

16. A method according to any one of claims 1 to 15, wherein there is used the blue dye of formula 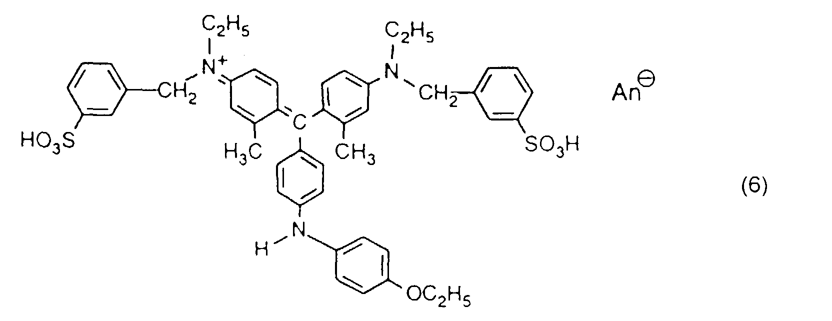 or of formula 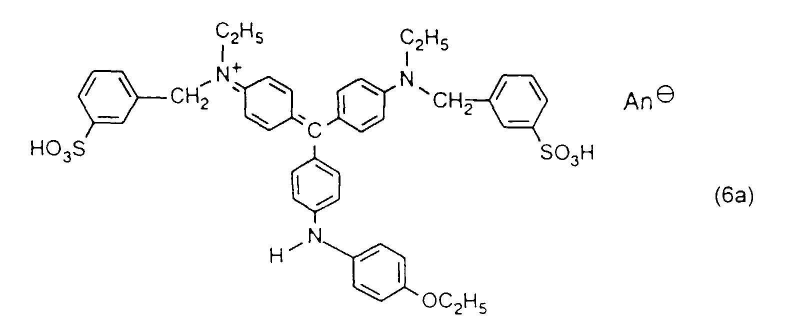 or of formula 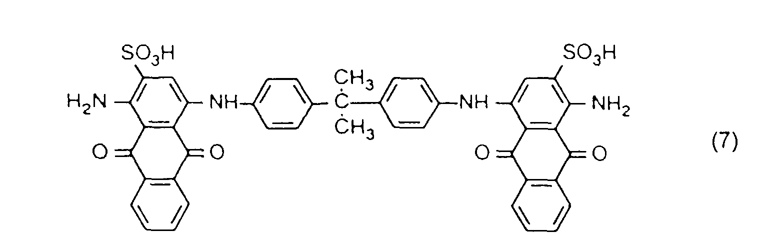 or of formula

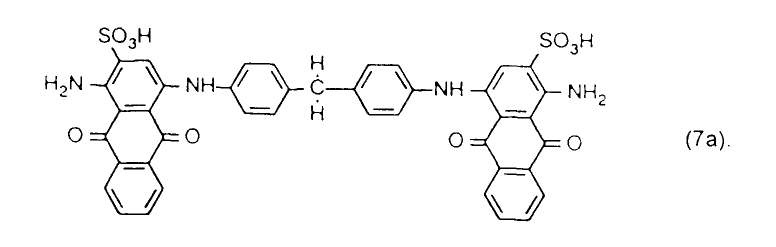

17. A method according to any one of claims 1 to 16, wherein there is used, for trichromatic dyeing, a dye mixture comprising the yellow dye of formula (4), the red dye of formula (5) and the blue dye of formula (6), (6a), (7) or (7a).

18. A method according to claim 2, wherein there are used, as water-soluble dyes, symmetrical 1:2 complexes of formula 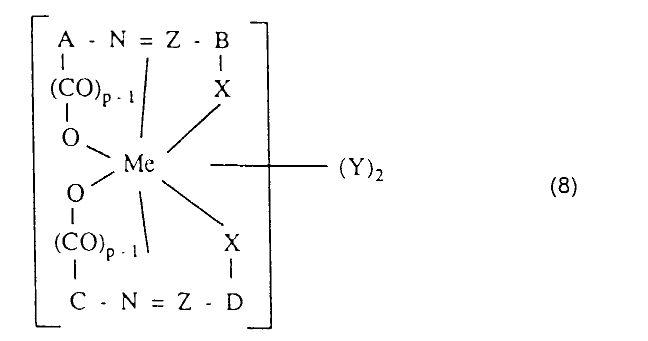 wherein
Z is nitrogen or a CH group,
A and C are identical radicals of the benzene or naphthalene series that contain a hydroxy or carboxy group in the o-position with respect to the azo or azomethine group,
B and D are, when Z is nitrogen, identical radicals of a coupling component, the coupling component containing the group X in the o- or α-position with respect to the azo group, or, when Z is the CH group, identical radicals of an o-hydroxyaldehyde,
X is oxygen or a group -NQ- wherein Q is hydrogen or C₁-C₄alkyl,
Me is chromium or cobalt,
Y is the SO₃H group, and
p is 1 or 2,
and wherein the dyes
a) exhibit no, or only a slight, tendency to aggregate in electrolyte-containing aqueous solution and
b) have a penetration depth of from 20 to 200 µm on standard chrome leather, with the differences between the penetration depths of the individual dyes of the mixture being within 50 µm.

19. A method according to claim 18, wherein there are used dyes of formula (8) wherein X is is oxygen.

20. A method according to either claim 18 or claim 19, wherein there are used dyes of formula (8) wherein p is equal to 1.

21. A method according to any one of claims 18 to 20, wherein there are used dyes of formula (8) wherein each of A and C is the radical of a 1-hydroxy-2-aminobenzene that is unsubstituted or mono- or poly-substituted by identical or different substituents from the series nitro, sulfo, chlorine, methyl or methoxy.

22. A method according to any one of claims 18 to 21, wherein there are used dyes of formula (8) wherein each of A and C is the radical of a 1-hydroxy-2-aminobenzene that carries a nitro group in the 4- or 5-position, or the radical of a 1-hydroxy-2-aminobenzene that carries a nitro group in the 4-position and a sulfo group in the 6-position, or the radical of a 1-hydroxy-2-aminobenzene that carries a sulfo group in the 4-position and a nitro group in the 6-position.

23. A method according to any one of claims 18 to 22, wherein there are used dyes of formula (8) wherein each of B and D is the radical of one of the following coupling components:
phenol that couples in the o-position and is unsubstituted or substituted by C₁-C₄alkyl or C₁-C₄alkoxy, amino or by acylamino,
resorcinol,
m-phenylenediamine that is unsubstituted or substituted in the 4-position by sulfo, chlorine, methyl or by methoxy,
naphthols that are unsubstituted or substituted by C₁-C₄alkyl or C₁-C₄alkoxy, chlorine, amino, acylamino or by sulfo,
5-pyrazolones or 5-aminopyrazoles having in the 1-position a phenyl or naphthyl radical that is unsubstituted or substituted by chlorine, nitro, C₁-C₄alkyl groups, C₁-C₄alkoxy groups or by sulfo groups, and having in the 3-position a C₁-C₄alkyl group, especially a methyl group,
acetoacetic acid amides, acetoacetic acid anilides and benzoylacetic acid anilides, the anilide nucleus of which may be unsubstituted or substituted by chlorine, C₁-C₄alkyl groups, C₁-C₄alkoxy groups or by sulfo groups,
6-hydroxy-3-cyano- or 6-hydroxy-3-carboxamido-4-alkyl-2-pyridones that are substituted in the 1-position by unsubstituted or substituted C₁-C₄alkyl, for example methyl, isopropyl, (3-hydroxyethyl, β-aminoethyl or γ-isopropoxypropyl, or by phenyl and that have in the 4-position a C₁-C₄alkyl group, especially a methyl group.

24. A method according to claim 23, wherein there are used dyes of formula (8) wherein each of B and D is the radical of one of the following coupling components:
p-C₁-C₄alkylphenol, resorcinol, m-phenylenediamine, 1- or 2-naphthol, unsubstituted or substituted by sulfo, 1-phenyl-3-methyl-5-pyrazolone or acetoacetic acid anilide, it being possible for the phenyl group in the two last-mentioned compounds to be substituted by chlorine, C₁-C₄alkyl, C₁-C₄alkoxy or by sulfo.

25. A method according to claim 18, wherein there are used, as water-soluble dyes, symmetrical 1:2 complexes of formula 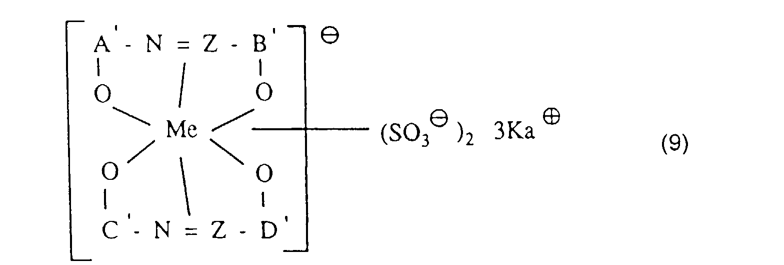 wherein
Z is nitrogen or a CH group,
each of A' and C' is the radical of a 1-hydroxy-2-aminobenzene that carries a nitro group in the 4- or 5-position, or the radical of a 1-hydroxy-2-aminobenzene that carries a nitro group in the 4-position and a sulfo group in the 6-position, or the radical of a 1-hydroxy-2-aminobenzene that carries a sulfo group in the 4-position and a nitro group in the 6-position,
each of B' and D' is, if Z is nitrogen, the radical of one of the following coupling components: p-C₁-C₄alkylphenol, resorcinol, m-phenylenediamine, 1- or 2-naphthol, unsubstituted or substituted by sulfo, 1-phenyl-3-methyl-5-pyrazolone or acetoacetic acid anilide, it being possible for the phenyl group in the two last-mentioned compounds to be substituted by chlorine, C₁-C₄alkyl, C₁-C₄-alkoxy or by sulfo, or, if Z is the CH group, the radical of an o-hydroxybenzaldehyde or o-hydroxynaphthaldehyde each of which may be substituted by phenylazo or by sulfophenylazo,
Me is cobalt or chromium and
Ka^{⊕} is a cation.

26. A method according to claim 18, wherein there are used at least three water-soluble dyes of formula (8).

27. A method according to any one of claims 18 to 26, wherein there is used a mixture of water-soluble dyes comprising
a) a dye of formula 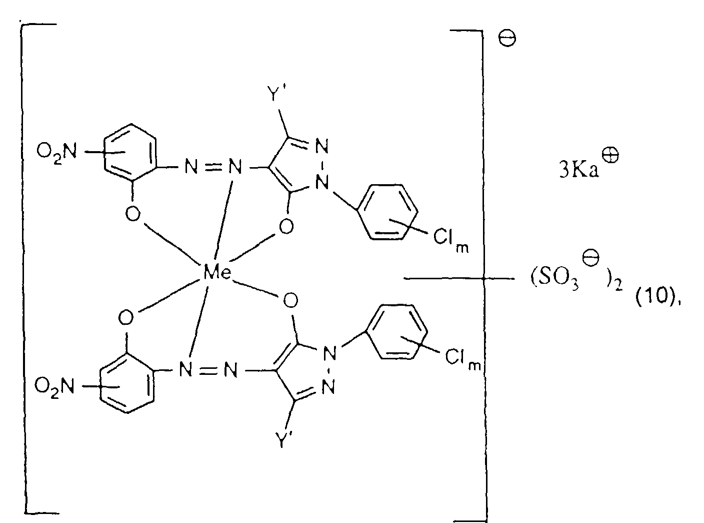 wherein m is an integer from 0 to 2, Me is cobalt or chromium, Ka^{⊕} is a cation and Y' is methyl, -CONH₂ or -CONHR₁, with R₁ being C₁-C₄alkyl,
b) a dye of formula 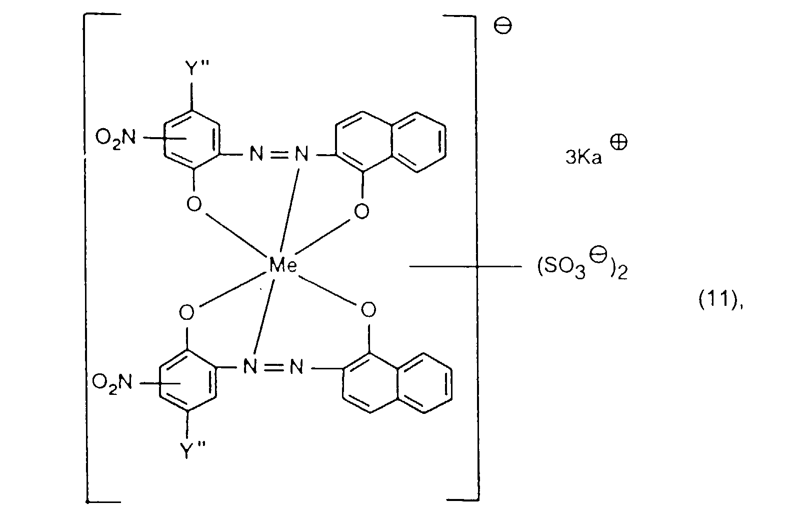 wherein Y" is hydrogen, chlorine, methyl or methoxy, Me is cobalt or chromium and Ka^{⊕} is a cation, and
c) a further dye of formula (10) given above or a dye of formula 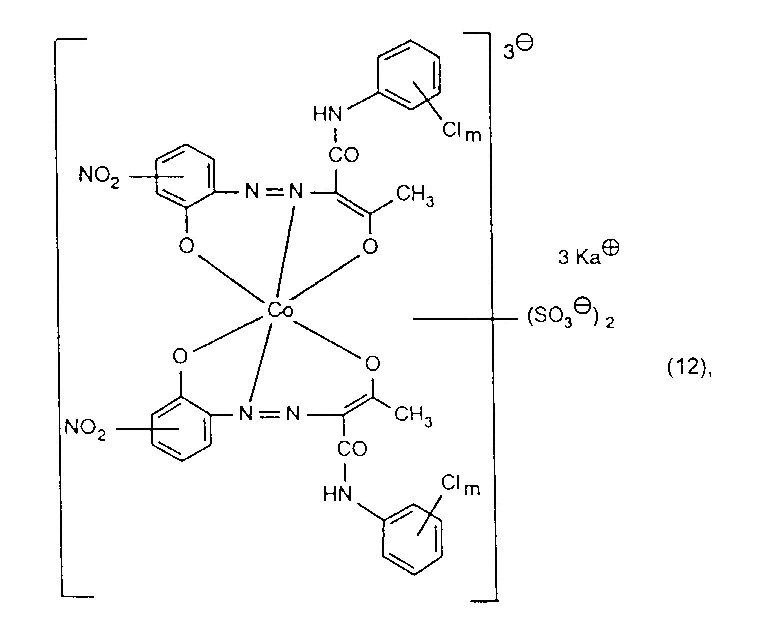 wherein m is an integer from 0 to 2 and Ka^{⊕} is a cation.

28. A method according to any one of claims 1 to 27, wherein there are used at least two pigments selected from a group of pigments suitable for trichromatic dyeing.

29. A method according to claim 28, wherein there are used pigments selected from the group consisting of
a) yellow pigments of formula 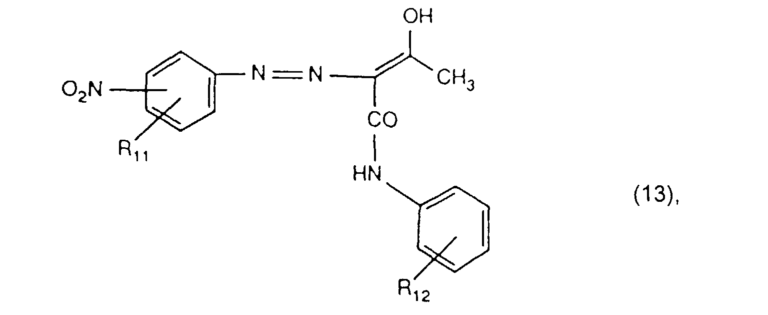 wherein R₁₁ and R₁₂ are each independently of the other hydrogen, C₁-C₄alkyl, C₁-C₄alkoxy or halogen,
b) red pigments of formula 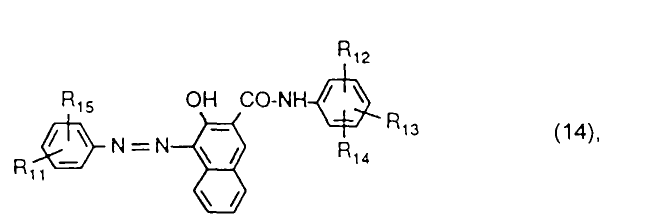 wherein R₁₁, R₁₂, R₁₃ and R₁₄ are each independently of the others hydrogen, C₁-C₄alkyl, C₁-C₄alkoxy or halogen and R₁₅ is a radical of formula -SO₂-N(R₁₆)₂, with R₁₆ being unsubstituted or substituted C₁-C₄alkyl, and
c) the blue pigment of formula

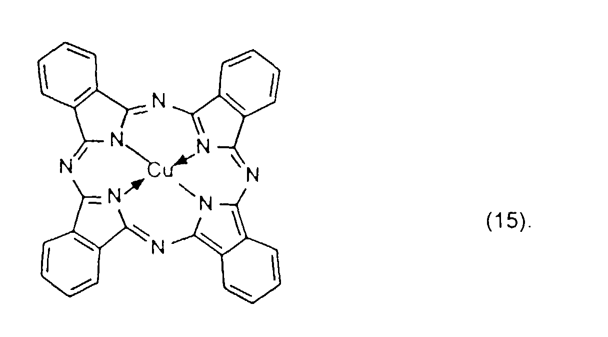

30. A method according to any one of claims 1 to 29, wherein there is used a brown pigment of formula

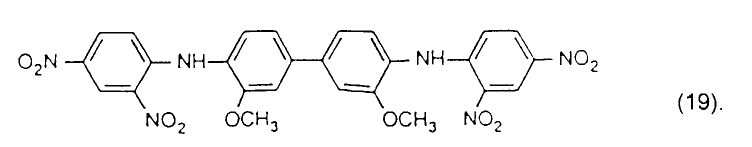

31. A method according to any one of claims 1 to 30, wherein there is used the yellow pigment of formula 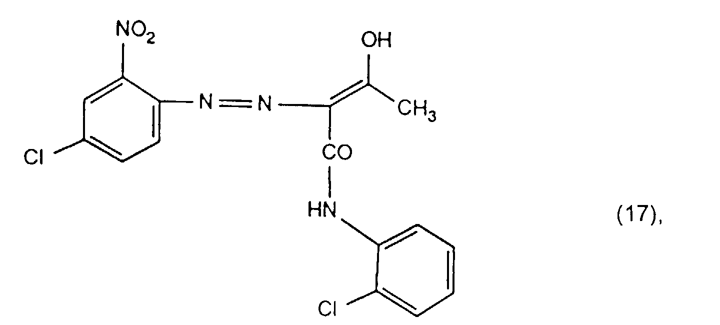 the red pigment of formula 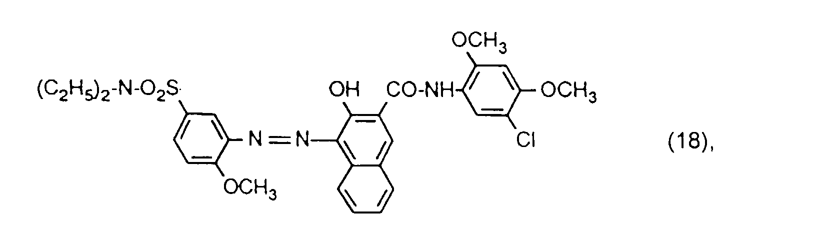 the blue pigment of formula 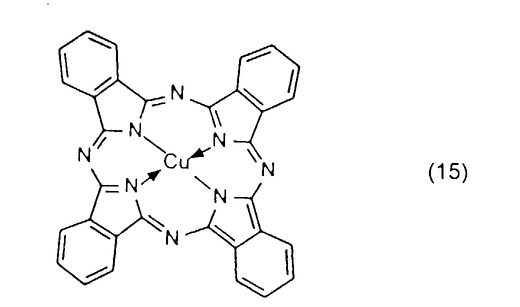 or the brown pigment of formula

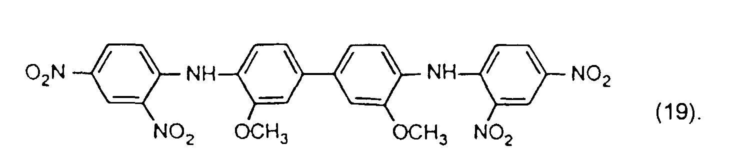

32. A method according to any one of claims 1 to 31, wherein the leather is treated with a cationic auxiliary before or during treatment with the pigments.

33. A method according to claim 32, wherein there is used, as a cationic auxiliary, a polyquaternary amine-ethylene oxide adduct, a cationic preparation based on chlorinated hydrocarbons and n-alkyl derivatives or a cationic chromium-containing phenolsulfo acid condensate.

34. A method according to claim 33, wherein there is used, as a cationic auxiliary, a cationic chromium-containing phenolsulfo acid condensate.

35. Leather dyed by the method according to claims 1 - 34.

## Revendications

1. Procédé pour la teinture de cuir à l'aide de mélanges de colorants, caractérisé en ce que l'on teint le cuir d'abord avec au moins deux colorants hydrosolubles et au moins deux pigments pratiquement insolubles dans l'eau, les colorants et les pigments étant choisis de façon telle que le mélange des colorants et le mélange des pigments donnent la même nuance sur le cuir.

2. Procédé selon la revendication 1, caractérisé en ce que l'on utilise au moins deux colorants hydrosolubles, pris dans un groupe de colorants hydrosolubles appropriés à la teinture par trichromie.

3. Procédé selon la revendication 2, caractérisé en ce que l'on utilise au moins deux colorants non métalliques, chacun comportant deux groupes sulfo ou carboxy et ayant une masse molaire comprise entre 790 et 1100.

4. Procédé selon la revendication 3, caractérisé en ce que l'on utilise au moins deux colorants pris dans le groupe constitué par
a) un colorant jaune de formule 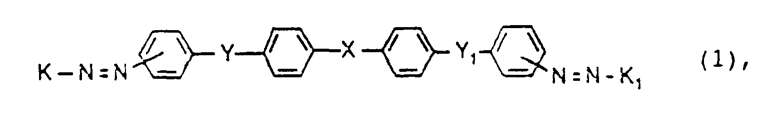 où
Y et Y₁ représentent chacun, indépendamment l'un de l'autre, -SO₂O-, -COO-, CONH- ou SO₂NH-,
X représente des groupes -alkylène en C₁-C₄-, -CH=CH-, -O-, -S-, -SO₂-, -NH-, 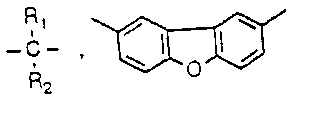 ou 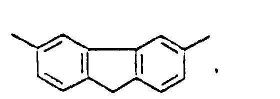
R₁ et R₂ représentent chacun, indépendamment l'un de l'autre, un groupe alkyle en C₁-C₄, et
K et K₁ représentent chacun, indépendamment l'un de l'autre, un composant de copulation de formule 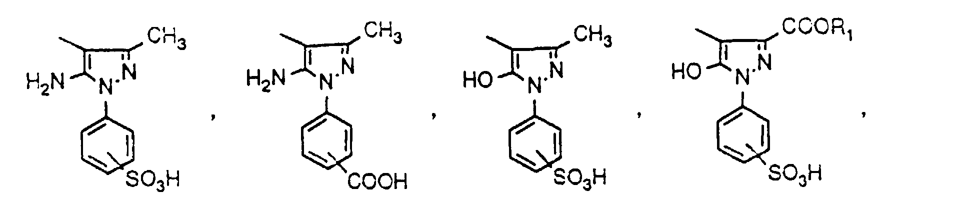 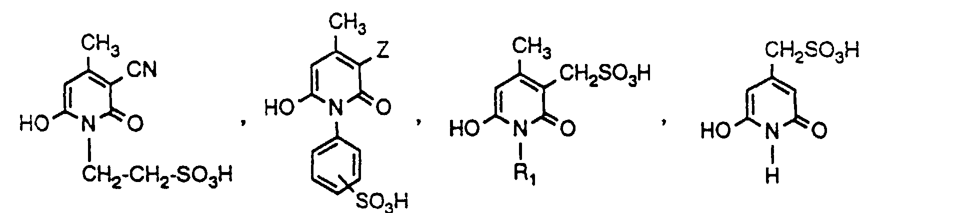 ou 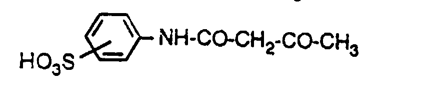 où
Z représente CN, COOH, COONH₂ ou COOR₁,
b) un colorant rouge de formule 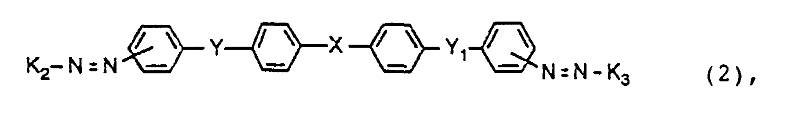 où
K₂ et K₃ représentent chacun, indépendamment l'un de l'autre, un composant de copulation de formule 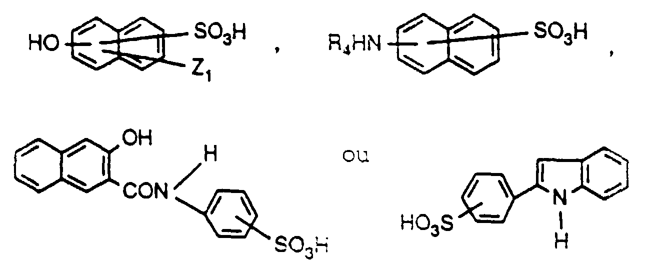 où
Z représente un atome d'hydrogène, des groupes OH ou NHR₃, R₃ représentant un atome d'hydrogène, des groupes alkyle en C₁-C₄, cyanoalkyle en C₁-C₄, (alkyl en C₁-C₄)carbonyle, aminocarbonyle, phénylcarbonyle ou phényle, le groupe phényle dans les deux derniers restes cités pouvant être substitué par des groupes alkyle en C₁-C₄, et
R₄ représente un atome d'hydrogène ou un groupe phényle,
et
c) un colorant bleu de formule 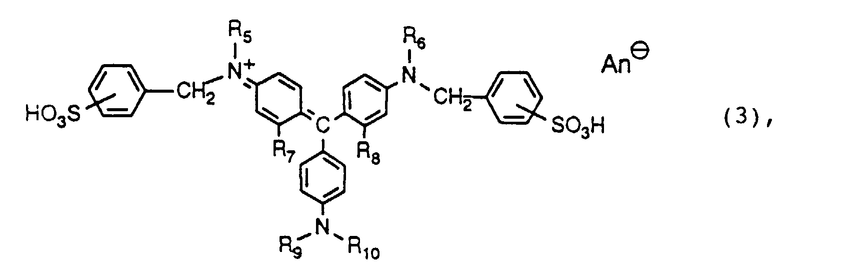
où
R₅, R₆, R₇, R₈ et R₉ représentent chacun, indépendamment les uns des autres, des atomes d'hydrogène ou des groupes alkyle en C₁-C₄,
R₁₀ représente un atome d'hydrogène, des groupes phényle ou phényle substitué par des groupes alkyle en C₁-C₄ ou alkoxy en C₁-C₄ et
An^{⊖} représente un anion incolore,
ou de formule 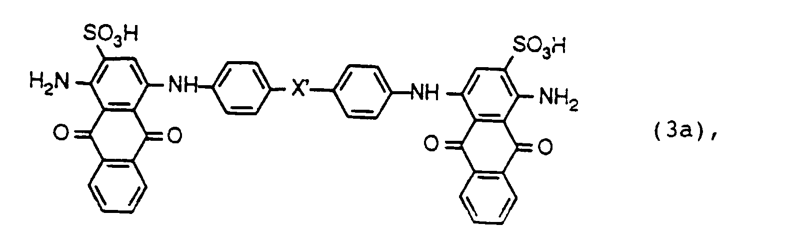 où X' représente des groupes -alkylène en C₁-C₄-, -CH=CH-, -O-, -S-, -SO₂-, -NH-, 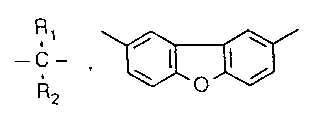 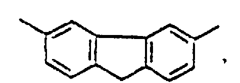 -NH-CO-, -NHSO₂- ou -NH-CO-NH-, R₁ et R₂ représentant chacun, indépendamment l'un de l'autre, un groupe alkyle en C₁-C₄.

5. Procédé selon la revendication 4, caractérisé en ce que l'on utilise pour la teinture par trichromie un mélange de colorante hydrosolubles, contenant un colorant jaune de formule (1), un colorant rouge de formule (2) et un colorant bleu de formule (3) ou (3a).

6. Procédé selon l'une des revendications 1 à 5, caractérisé en ce que l'on utilise un colorant jaune de formule (1), où Y et Y₁ représentent chacun un groupe -SO₂O-.

7. Procédé selon l'une des revendications 1 à 6, caractérisé en ce que l'on utilise un colorant jaune de formule (1), où X représente

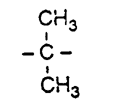

8. Procédé selon l'une des revendications 1 à 7, caractérisé en ce que l'on utilise un colorant jaune de formule (1), où K et K₁ représentent chacun un composant de copulation de formule

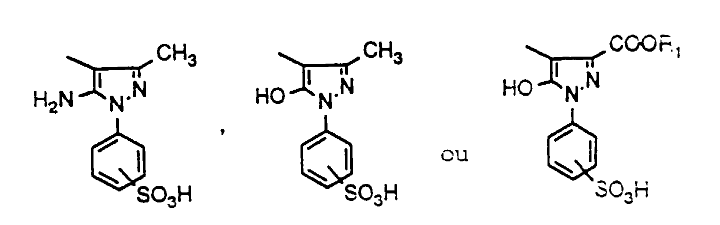

9. Procédé selon l'une des revendications 1 à 8, caractérisé en ce que l'on utilise un colorant jaune de formule

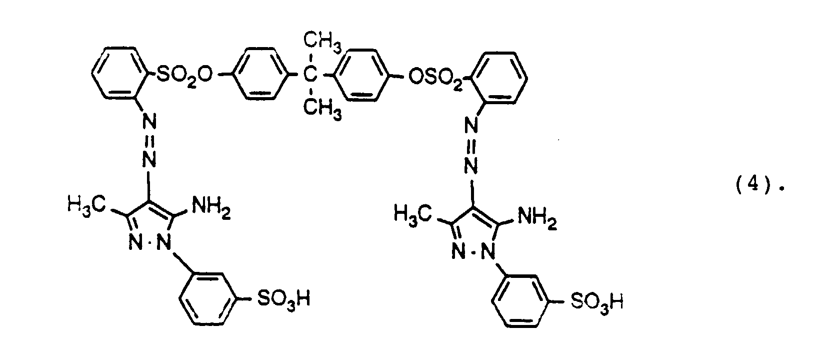

10. Procédé selon l'une des revendications 1 à 9, caractérisé en ce que l'on utilise un colorant rouge de formule (2), où Y et Y₁ représentent le groupe -SO₂O-.

11. Procédé selon l'une des revendications 1 à 10, caractérisé en ce que l'on emploie un colorant rouge de formule (2), où X représente

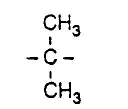

12. Procédé selon l'une des revendications 1 à 11, caractérisé en ce que l'on utilise un colorant rouge de formule (2), où K₂ et K₃ représentent chacun un composant de copulation de formule 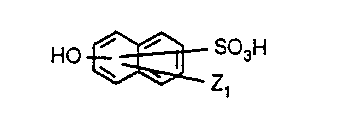 où
Z₁ représente un atome d'hydrogène, des groupes OH ou NHR₃, R₃ représentant un atome d'hydrogène, des groupes alkyle en C₁-C₄, cyanoalkyle en C₁-C₄, (alkyl en C₁-C₄)-carbonyle, aminocarbonyle, phénylcarbonyle ou phényle, le groupe phényle dans les deux derniers restes cités pouvant être substitué par un groupe alkyle en C₁-C₄.

13. Procédé selon l'une des revendications 1 à 12, caractérisé en ce que l'on utilise le colorant rouge de formule

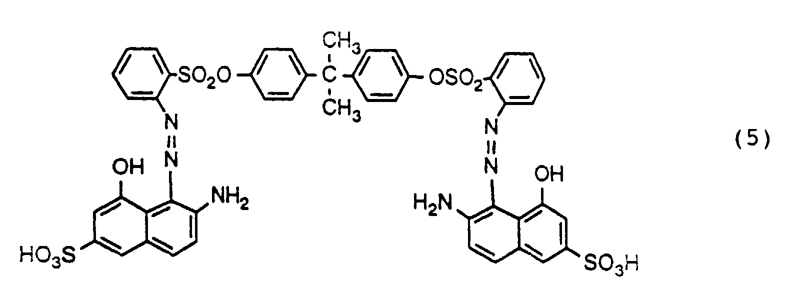

14. Procédé selon l'une des revendications 1 à 13, caractérisé en ce que l'on utilise un colorant bleu de formule (3), où R₅, R₆, R₇, R₈ et R₉ représentent chacun, indépendamment les uns des autres, un atome d'hydrogène ou un groupe alkyle en C₁-C₂ et R₁₀ représente un atome d'hydrogène, des groupes phényle ou phényle substitué par des substituants alkyle en C₁-C₂ ou alkoxy en C₁-C₂, ou de formule (3a), où X' représente des groupes -alkylène en C₁-C₄-, -CH=CH-, 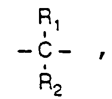 -NHCO- ou -NH-CO-NH-, R₁ et R₂ représentent chacun, indépendamment l'un de l'autre, un groupe alkyle en C₁-C₄.

15. Procédé selon la revendication 14, caractérisé en ce que l'on utilise le colorant bleu de formule (3), où R₅ et R₆ représentent chacun, indépendamment l'un de l'autre, un groupe alkyle en C₁-C₂, R₇ et R₈ représentent chacun, indépendamment l'un de l'autre, un atome d'hydrogène ou un groupe alkyle en C₁-C₂, R₉ représente un atome d'hydrogène et R₁₀ représente des groupes phényle ou phényle substitué par des substituants alkyle en C₁-C₂ ou alkoxy en C₁-C₂, ou un colorant bleu de formule (3a), où X' représente des groupes -alkylène en C₁-C₄- ou 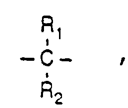 R₁ et R₂ représentant chacun, indépendamment l'un de l'autre, un groupe alkyle en C₁-C₄.

16. Procédé selon l'une des revendications 1 à 15, caractérisé en ce que l'on utilise le colorant bleu de formule 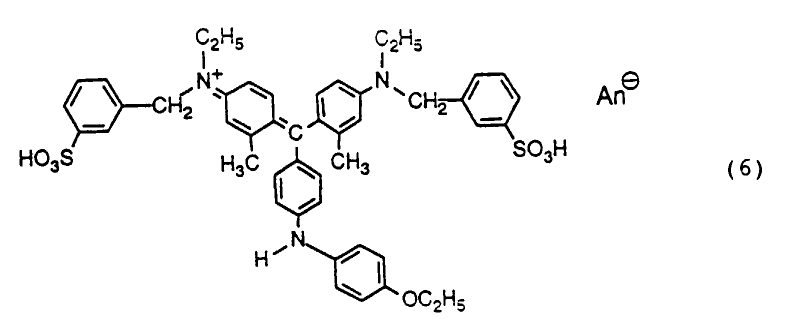 ou de formule 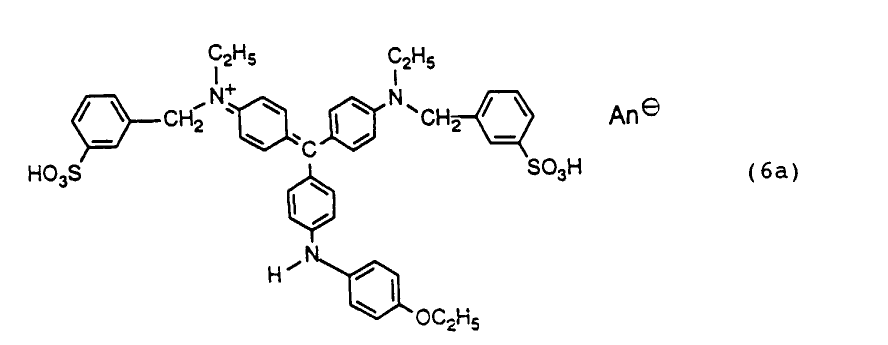 ou de formule 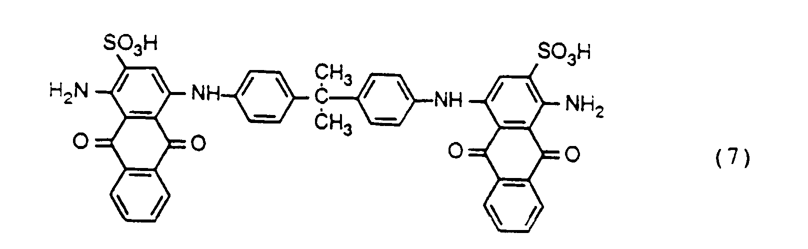 ou de formule

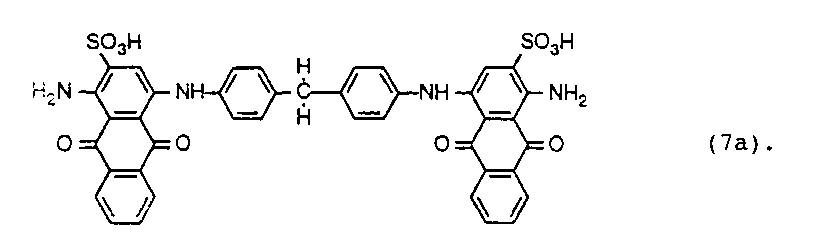

17. Procédé selon l'une des revendications 1 à 16, caractérisé en ce que l'on utilise pour la teinture par trichromie, un mélange de colorants contenant le colorant jaune de formule (4), le colorant rouge de formule (5) et le colorant bleu de formule (6), (6a), (7) ou (7a).

18. Procédé selon la revendication 2, caractérisé en ce que l'on utilise comme colorants hydrosolubles des complexes symétriques 1:2 de formule 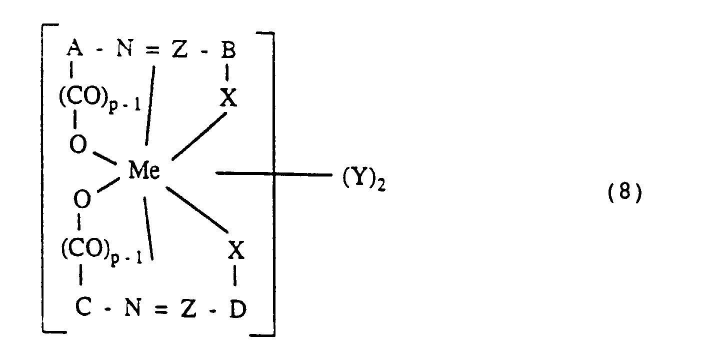 où
Z représente un atome d'azote ou un groupe CH,
A et C sont des restes identiques de la famille du benzène ou du naphtalène, lesquels présentent un groupe hydroxy ou carboxy en position ortho par rapport au groupe azo ou azométhine,
B et D sont des restes identiques d'un composant de copulation, lorsque Z représente un atome d'azote, le composant de copulation présentant le groupe X en position ortho ou α par rapport au groupe azo, ou des restes identiques d'un o-hydroxyaldéhyde, lorsque Z représente le groupe CH,
x représente un atome d'oxygène ou un groupe -NQ-, où Q représente un atome d'hydrogène ou un groupe alkyle en C₁-C₄,
Me représente un atome de chrome ou de cobalt,
Y représente le groupe SO₃H et
p vaut 1 ou 2,
et où les colorants
a) ne présentent pas ou seulement une faible tendance à l'agrégation dans une solution aqueuse contenant des électrolytes et
b) présentent sur un cuir chromé standard une profondeur de pénétration comprise entre 20 et 200 µm, les différences dans la profondeur de pénétration des différents colorants du mélange se trouvant dans le domaine de 50 µm.

19. Procédé selon la revendication 18, caractérisé en ce que l'on utilise des colorants de formule (8), où X représente un atome d'oxygène.

20. Procédé selon la revendication 18 ou 19, caractérisé en ce que l'on utilise des colorants de formule (8), où p est égal à 1.

21. Procédé selon l'une des revendications 18 à 20, caractérisé en ce que l'on utilise des colorants de formule (8), où A et C représentent chacun le reste d'un 1-hydroxy-2-aminobenzène, lequel est éventuellement substitué une ou plusieurs fois par des substituants identiques ou différents pris parmi les groupes nitro, sulfo, chloro, méthyle ou méthoxy.

22. Procédé selon l'une des revendications 18 à 21, caractérisé en ce que l'on utilise des colorants de formule (8), où A et C représentent chacun le reste d'un 1-hydroxy-2-aminobenzène, lequel porte un groupe nitro en position 4 ou 5, ou le reste d'un 1-hydroxy-2-aminobenzène, lequel porte un groupe nitro en position 4 et un groupe sulfo en position 6, ou le reste d'un 1-hydroxy-2-aminobenzène lequel porte un groupe sulfo en position 4 et un groupe nitro en position 6.

23. Procédé selon l'une des revendications 18 à 22, caractérisé en ce que l'on utilise des colorants de formule (8), où B et D représentent chacun le reste d'un composant de copulation suivant :
phénol copulant en position ortho, éventuellement substitué par des substituants alkyle en C₁-C₄ ou alkoxy en C₁-C₄, amino ou acylamino,
résorcine,
m-phénylène diamine, laquelle est éventuellement substituée en position 4 par des groupes sulfo, chloro, méthyle ou méthoxy,
naphtols, éventuellement substitués par des substituants alkyle en C₁-C₄ ou alkoxy en C₁-C₄, chloro, amino, acylamino ou sulfo,
5-pyrazolones ou 5-aminopyrazoles, présentant en position 1 un reste phényle ou naphtyle éventuellement substitué par des groupes chloro, nitro, alkyle en C₁-C₄, alkoxy en C₁-C₄ ou sulfo, et en position 3 un groupe alkyle en C₁-C₄, de préférence méthyle,
amides de l'acide acétoacétique, anilides de l'acide acétoacétique et anilides de l'acide benzoylacétique, lesquels peuvent être éventuellement substitués sur le noyau anilide par des groupes chloro, alkyle en C₁-C₄, alkoxy en C₁-C₄ ou sulfo,
6-hydroxy-3-cyano- ou 6-hydroxy-3-carboxamido-4-alkyl-2-pyridones, qui sont substituées en position 1 par un groupe alkyle en C₁-C₄ éventuellement substitué par des substituant, par exemple, méthyle, isopropyle, β-hydroxyéthyle, β-aminoéthyle ou γ-isopropyle ou par phényle, et présentent en position 4 un groupe alkyle en C₁-C₄, en particulier méthyle.

24. Procédé selon la revendication 23, caractérisé en ce que l'on utilise des colorants de formule (8), où B et D représentent chacun un reste d'un des composants de copulation suivants :
p-(alkyle en C₁-C₄)-phénol, résorcine, m-phénylène diamine, 1- ou 2-naphtol, substitué éventuellement par un substituant sulfo, 1-phényl-3-méthyl-5-pyrazolone ou anilide de l'acide acétoacétique, le groupe phényle dans les deux derniers composés pouvant être substitué par des substituants chloro, alkyle en C₁-C₄, alkoxy en C₁-C₄ ou sulfo.

25. Procédé selon la revendication 18, caractérisé en ce que l'on utilise comme colorants hydrosolubles des complexes symétriques 1:2 de formule 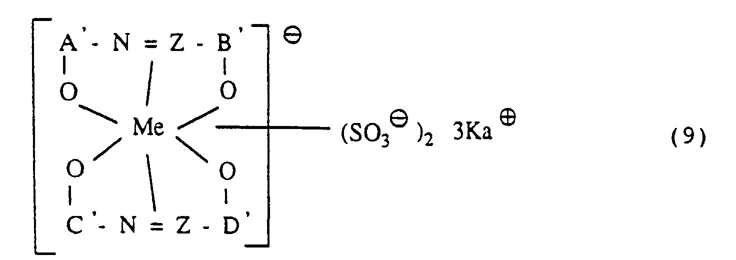 dans laquelle
Z représente un atome d'azote ou un groupe CH,
A' et C' représentent chacun un reste d'un 1-hydroxy-2-aminobenzène, qui porte un groupe nitro en position 4 ou 5, ou le reste d'un 1-hydroxy-2-aminobenzène qui porte un groupe nitro en position 4 et un groupe sulfo en position 6, ou le reste d'un 1-hydroxy-2-aminobenzène qui porte un groupe sulfo en position 4 et un groupe nitro en position 6,
B' et D' représentent chacun le reste des composants de copulation suivants, dans le cas où Z représente un atome d'azote : p-(alkyl en C₁-C₄)phénol, résorcine, m-phénylène diamine, 1- ou 2-naphtol, éventuellement substitué par un substituant sulfo, anilide de l'acide acétoacétique ou 1-phényl-3-méthyl-5-pyrazolone, le groupe phényle des deux derniers composés cités pouvant être substitué par des substituants chloro, alkyle en C₁-C₄, alkoxy en C₁-C₄ ou sulfo, ou dans le cas où Z représente le groupe CH, le reste d'un o-hydroxybenzaldéhyde ou o-hydroxynaphtaldéhyde, lesquels pouvant être substitués par des substituants phénylazo ou sulfophénylazo,
Me représente des atomes de cobalt ou de chrome,
Ka^{⊕} représente un cation.

26. Procédé selon la revendication 18, caractérisé en ce que l'on utilise au moins trois colorants hydrosolubles de formule (8).

27. Procédé selon l'une des revendications 18 à 26, caractérisé en ce que l'on utilise un mélange de colorants hydrosolubles contenant
a) un colorant de formule 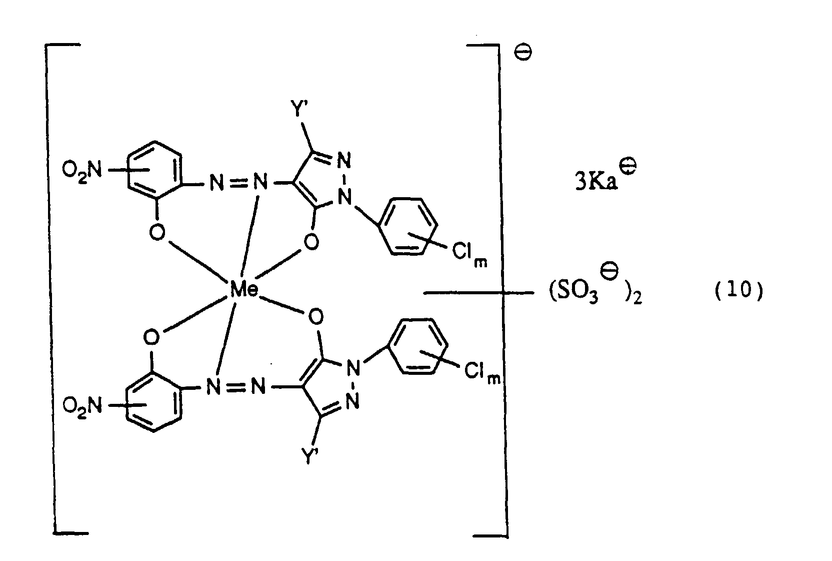 où
m est un nombre entier de 0 à 2,
Me représente un atome de cobalt ou de chrome,
Ka^{⊕} représente un cation et
Y' représente des groupes méthyle, -CONH₂ ou -CONHR₁, R₁ représentant un groupe alkyle en C₁-C₄,
b) un colorant de formule 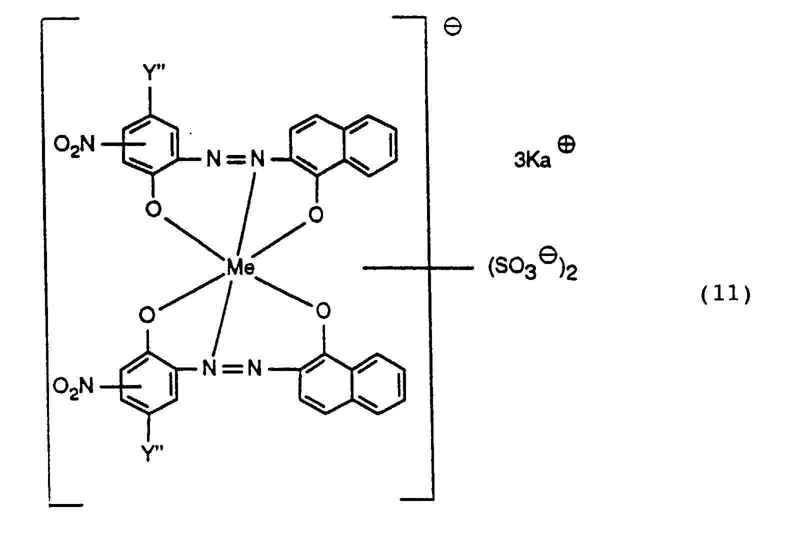 où
Y" représente un atome d'hydrogène, des groupes méthyle ou méthoxy,
Me représente un atome de cobalt ou de chrome,
Ka^{⊕} représente un cation, ainsi que
c) un autre colorant de formule (10) indiquée ci-dessus, ou un colorant de formule 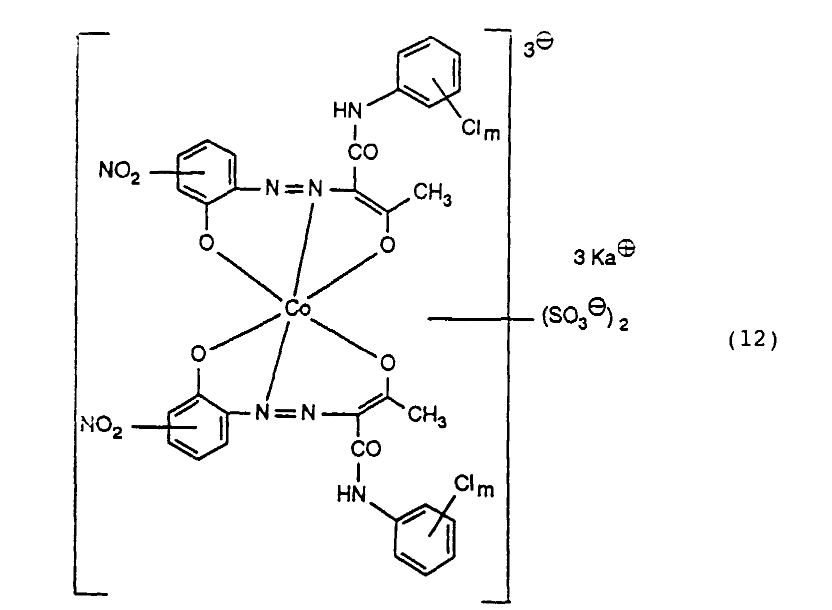 où m est un entier de 0 à 2, Ka^{⊕} représente un cation.

28. Procédé selon l'une des revendications 1 à 27, caractérisé en ce que l'on utilise au moins deux pigments, pris dans le groupe des pigments appropriés à la teinture apr trichromie.

29. Procédé selon la revendication 28, caractérisé en ce que l'on utilise des pigments pris dans le groupe constitué par
a) des pigments jaunes de formule 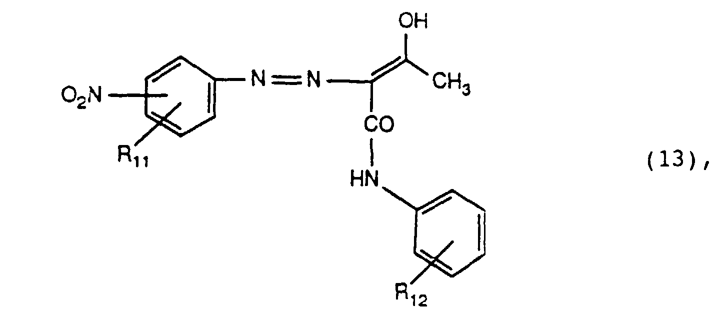 où R₁₁ et R₁₂ représentent chacun, indépendamment l'un de l'autre, un atome d'hydrogène, des groupes alkyle en C₁-C₄, alkoxy en C₁-C₄ ou halogène;,
b) des pigments rouges de formule 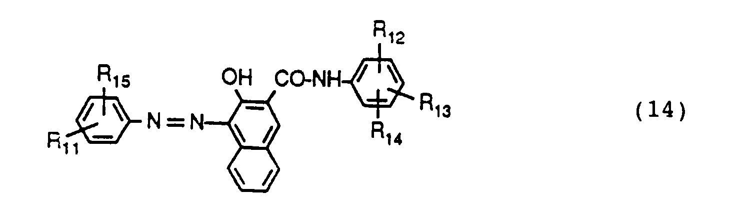 où R₁₁, R₁₂, R₁₃ et R₁₄ représentent chacun, indépendamment l'un de l'autre, des atomes d'hydrogène, des groupes alkyle en C₁-C₄, alkoxy en C₁-C₄ ou halogène et R₁₅ représente un reste de formule -SO₂-N(R₁₆)₂, R₁₆ représentant un groupe alkyle en C₁-C₄ éventuellement substitué, et
c) du pigment bleu de formule

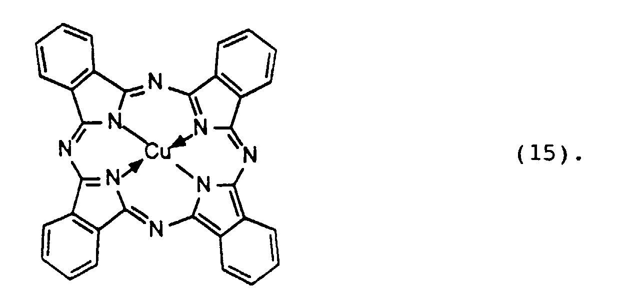

30. Procédé selon l'une des revendications 1 à 29, caractérisé en ce que l'on utilise un pigment brun de formule

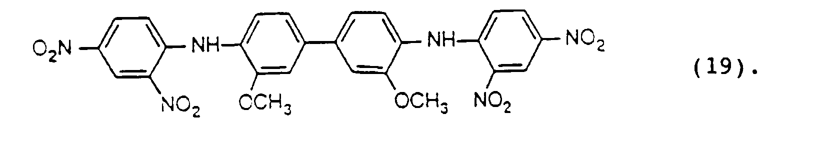

31. Procédé selon l'une des revendications 1 à 30, caractérisé en ce que l'on utilise le pigment jaune de formule 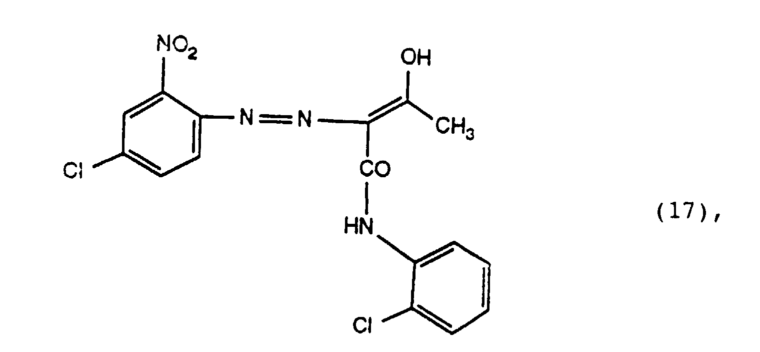 le pigment rouge de formule 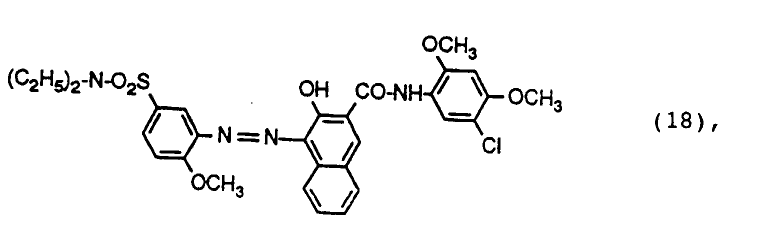 le pigment bleu de formule 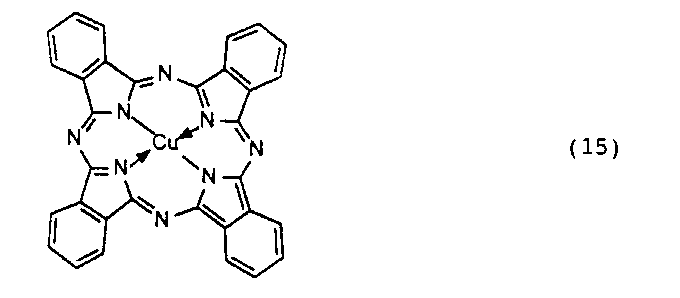 ou le pigment brun de formule

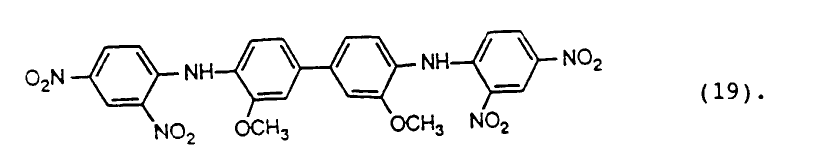

32. Procédé selon l'une des revendications 1 à 31, caractérisé en ce que l'on traite le cuir, avant ou au cours du traitement par les pigments, par un adjuvant cationique.

33. Procédé selon la revendication 32, caractérisé en ce que l'on utilise comme adjuvants cationiques des adduits polyquaternaires amine-oxyde d'éthylène, des préparations cationiques à base d'hydrocarbures chlorés et des dérivés de n-alkyle ou des condensats cationiques de l'acide phénolsulfonique contenant des sels de chrome.

34. Procédé selon la revendication 33, caractérisé en ce que l'on utilise comme adjuvants cationiques des condensats cationiques de l'acide phénolsulfonique contenant du chrome.

35. Cuir teint à l'aide du procédé selon les revendications 1 à 34.
